(19) Europäisches Patentamt
European Patent Office
Office européen des brevets

(11) **EP 1 634 368 B1**

(12) **EUROPÄISCHE PATENTSCHRIFT**

(45) Veröffentlichungstag und Bekanntmachung des Hinweises auf die Patenterteilung:
**14.05.2008 Patentblatt 2008/20**

(21) Anmeldenummer: **04735739.7**

(22) Anmeldetag: **02.06.2004**

(51) Int Cl.:
**H02P 9/10** (2006.01)

(86) Internationale Anmeldenummer:
**PCT/EP2004/005933**

(87) Internationale Veröffentlichungsnummer:
**WO 2004/112234 (23.12.2004 Gazette 2004/52)**

(54) **VERFAHREN UND DÄMPFUNGSVORRICHTUNG ZUR DÄMPFUNG EINER TORSIONSSCHWINGUNG IN EINEM ROTIERENDEN ANTRIEBSSTRANG**

METHOD AND DAMPING DEVICE FOR DAMPING A TORSIONAL VIBRATION IN A ROTATING DRIVETRAIN

PROCEDES ET DISPOSITIF D'AMORTISSEMENT POUR AMORTIR UNE VIBRATION DE TORSION DANS UN ENSEMBLE MOTEUR ROTATIF

(84) Benannte Vertragsstaaten:
**AT BE BG CH CY CZ DE DK EE ES FI FR GB GR HU IE IT LI LU MC NL PL PT RO SE SI SK TR**

(30) Priorität: **13.06.2003 DE 10326816**
**17.12.2003 DE 10359259**

(43) Veröffentlichungstag der Anmeldung:
**15.03.2006 Patentblatt 2006/11**

(73) Patentinhaber: **Max-Planck-Gesellschaft zur Förderung der Wissenschaften e.V.**
**80539 München (DE)**

(72) Erfinder: **SIHLER, Christof**
**85399 Hallbergmoos (DE)**

(74) Vertreter: **Hertz, Oliver**
**v. Bezold & Partner**
**Patentanwälte**
**Akademiestrasse 7**
**80799 München (DE)**

(56) Entgegenhaltungen:
**DE-A- 2 748 373**          **US-A- 4 377 780**
**US-A- 5 804 949**

- **CHI-JUI WU ET AL: "APPLICATION OF SIMULTANEOUS ACTIVE AND REACTIVE POWER MODULATION OF SUPERCONDUCTING MAGNETIC ENERGY STORAGE UNIT TO DAMP TURBINE-GENERATOR SUBSYNCHRONOUS OSCILLATIONS" IEEE TRANSACTIONS ON ENERGY CONVERSION, IEEE INC. NEW YORK, US, Bd. 8, Nr. 1, 1. März 1993 (1993-03-01), Seiten 63-70, XP000364036 ISSN: 0885-8969 in der Anmeldung erwähnt**

**Beschreibung**

Die Erfindung betrifft ein Verfahren zur Dämpfung einer Torsionsschwingung in einem Antriebsstrang gemäß dem Oberbegriff von Anspruch 1 sowie eine entsprechende Dämpfungsvorrichtung gemäß dem Oberbegriff von Anspruch 21.

In Antriebssträngen, die der Drehmomentübertragung dienen und die einen elektrischen Motor oder Generator enthalten, können insbesondere bei einer großen Masse der bewegten Teile, respektive großen Massenträgheitsmomenten der Welle und der an der Welle befestigten Teile in Verbindung mit geringen Dämpfungen, wie sie insbesondere für den Werkstoff Stahl typisch sind, Torsionsschwingungen auftreten. Aufgrund der geringen Dämpfung bedarf es zur Anregung einer Resonanztorsionsschwingung (Torsionsschwingung bei einer Resonanzfrequenz) nur relativ kleiner Leistungen. Die Anregung kann dabei insbesondere mechanisch und/oder elektrisch erfolgen. Auf der mechanischen Seite können die Anregungen beispielsweise durch plötzliche mechanische Lastwechsel mit einem breiten Anregungs-Frequenzspektrum verursacht werden. Auf der elektrischen Seite kann beispielsweise bei einem Generator das Hinzu- oder Abschalten von Lasten eine Anregung darstellen, oder es kommt durch elektromagnetische Ausgleichsvorgänge im Netz zu Anregungen mit der Resonanzfrequenz.

Die Resonanztorsionsschwingungen können erhebliche Schäden am Antriebsstrang oder an Teilen von diesem, z.B. Kupplungen, verursachen. Versagt der Antriebsstrang, d.h. kommt es aufgrund der Torsionsbelastung zum Bruch, kann es aufgrund der hohen mechanischen Energie der rotierenden Teile des Antriebsstrangs zur Zerstörung der an dem Antriebsstrang angeschlossenen Teile kommen. Selbst wenn die Schäden rechtzeitig bemerkt werden, sind die Reparaturen aufwändig und insbesondere wegen der Stilllegung während des Wartungszeitraumes sehr teuer. Da das einfache Abschalten der Maschinen bei Auftreten der genannten Torsionsschwingungen zwar möglich, aber wirtschaftlich nachteilig ist, wurden verschiedene Systeme entwickelt, um solche Schwingungen zu verhindern.

Beispielsweise wird im US-Patent US 5 804 949 eine Vorrichtung beschrieben, die über ein gesteuertes Schalten von Kapazitäten und/oder Induktivitäten unerwünschte Schwingungen auf der Lastseite eines Generators unterdrückt, und dadurch eine Schwingungsanregung der Antriebswelle, an der der Generator angeschlossen ist, unterdrückt oder zumindest eindämmt.

Nachteilig an dieser Vorrichtung ist, dass sie nur die Schwingungsanregung durch die elektrische Last unterdrückt, nicht jedoch die Schwingung direkt dämpft, also auch keiner Anregung, die auf der mechanischen Seite entsteht, entgegenwirken kann.

Zur unmittelbaren Dämpfung von Torsionsschwingungen im Antriebstrang eines Generators schlagen C.-J. Wu et al. in "IE-EE Trans. Energy Conv." Bd. 8, S.63 ff., 1993 ein System mit einem Energiezwischenspeicher vor, von dem Wirkleistung in den Generator übertragen und dadurch Schwingungen des Antriebsstranges entgegengewirkt werden kann. Zur Energiezwischenspeicherung wird eine in einem Gleichstromkreis angeordnete supraleitende Spule benutzt, wobei der Gleichstromkreis über eine Thyristorschaltung und einen Transformator an das elektrische Netz des Generators angeschlossen ist. Das Netz besteht aus einer Vielzahl verschiedener Verbraucher, die unabhängig voneinander kurzfristig Lasten zuschalten oder abschalten. Der ursprüngliche Zweck der von C.-J. Wu et al. beschriebenen Anordnung ist dabei nicht die Schwingungsdämpfung, sondern die Bereitstellung eines Energiezwischenspeichers zum Ausgleich kurzfristiger Lastunterschiede im Netz. Indem der Steuerung der Anordnung ein Regler überlagert wird, der Geschwindigkeitsänderungen an der Achse des Generators registriert und diesen mit Hilfe der Anordnung entgegenwirkt, können Torsionsschwingungen im Antriebsstrang, die sich als Geschwindigkeitsänderung an der Achse des Generators bemerkbar machen, gedämpft werden.

Mit diesem Verfahren könnte zwar theoretisch eine direkte Dämpfung der Torsionsschwingung realisiert werden. Insbesondere wegen der folgenden Nachteile ist das Verfahren von C.-J. Wu et al. jedoch für praktische Anwendungen ungeeignet. So werden bei diesem Verfahren alle Geschwindigkeitsänderungen erfasst und bedämpft, unabhängig davon, ob sie zu einer Torsionsschwingung in Resonanz gehören oder nicht. So kann es zu Störungen beim Generatorbetrieb kommen.

Außerdem ist der Einsatz in einem Netz problematisch, an dem mehrere Generatoren angeschlossen sind, deren Antriebsstränge gegebenenfalls unterschiedliche Resonanzfrequenzen aufweisen, da die Dämpfung einer Schwingung eines Antriebsstrangs zur Anregung einer Schwingung in einem anderen Antriebsstrang führen kann.

Zur Bereitstellung der Energie für die breitbandige Dämpfung des Antriebsstranges ist ferner die supraleitende Spule mit großer Induktivität erforderlich, mit deren Betrieb weitere Nachteile verbunden sind.

Problematisch bei dem Einsatz einer großen supraleitenden Spule zur Dämpfung von Schwingungen ist unter anderem, dass es bei einer Abgabe von Wirkleistung im Bereich zwischen 10 Hz und 40 Hz in der supraleitenden Wicklung zu Wechselfeldverlusten kommen kann, die zu einem Zusammenbruch der Supraleitung (Quench) führen können. Dies könnte zwar mit großem technischen Aufwand vermieden werden, im Ergebnis wäre die Anlage aber unwirtschaftlich. Außerdem ist es bei dem von C.-J. Wu et al. beschriebenen Verfahren mit einer großen Spule zwingend erforderlich, die Spule unabhängig vom Auftreten einer Schwingung, dauernd stromdurchflossen vorzuhalten, wodurch Verluste entstehen, insbesondere auch im Bereich der Kühlanlage.

Des weiteren ist die Messung der Geschwindigkeitsunterschiede der Generatorachse als Regelgröße störanfällig, da die Geschwindigkeitsabweichungen relativ zur Rotationsgeschwindigkeit der Achse sehr klein sind. Dies zum einen deshalb, da die Achsen mit Rotationsgeschwindigkeiten von teilweise über 1000 Umdrehungen pro Minute rotieren, und außerdem die Winkelgeschwindigkeiten aufgrund der Torsionsschwingung bei Achsen mit einem großen Durchmesser, beispielsweise mehr als 20 cm, sehr klein sind. So können bei Antriebssträngen großer Generatoren Schwingungen bei etwa 30 Hz mit einer Amplitude der gesamten Winkelverdrehung von einem Zehntel Grad bereits zu kritischen Beanspruchungen führen. Angesichts der hohen Winkelgeschwindigkeit der Welle auf Grund der betriebsbedingten Rotation ist die Messung solcher Winkelverdrehungen über eine Geschwindigkeitsmessung der Welle fehlerbehaftet und unzuverlässig.

Die US 4 377 780 offenbart ein Verfahren und eine Vorrichtung zur Dämpfung einer Torsionsschwingung in einem rotierenden Antriebsstrang, wobei eine elektrische Maschine dem Antriebsstrang ein Dämpfungsdrehmoment in Gegenphase zu der Winkelgeschwindigkeit der Torsionsschwingung aufprägt. Die Energie für das Dämpfungsdrehmoment wird bereitgestellt, indem ein Stromrichter, an dem ein Gleichstromverbrauchernetz angeschlossen ist und der über einen Wechselstromkreis mit der elektrischen Maschine verbunden ist, entsprechend angesteuert wird, so dass es entsprechend der zur Dämpfung entnommenen Leistung zu Spannungsschwankungen in dem Gleichstromnetz kommen kann.

Die US 5 537 967 offenbart ein Regelungssystem für einen Hybridantrieb eines Fahrzeugs, wobei die elektrische Maschine des Hybridantriebs dazu benutzt wird, Schwingungen zu dämpfen, die sich aus der Kinematik der Kolbenbrennkraftmaschine ergeben. Die Dämpfung erfolgt mit einer Frequenz proportional zur Drehzahl der Kolbenbrennkraftmaschine. Weiterhin wird eine Batterie als Energiespeicher für die elektrische Maschine offenbart.

Der Erfindung liegt die Aufgabe zugrunde, ein Verfahren und eine Vorrichtung zur Dämpfung von Torsionsschwingungen in rotierenden Antriebssträngen anzugeben, wobei die Dämpfung mit möglichst geringem Aufwand erfolgen soll und Resonanzschwingungen im Antriebsstrang unterdrücken soll. Außerdem soll die Dämpfung von mehreren Antriebssträngen verschiedener elektrischer Maschinen, die an ein Netz angeschlossen sind, mit gegebenenfalls unterschiedlichen Torsionsresonanzfrequenzen mit möglichst geringem Aufwand erfolgen.

Diese Aufgaben werden hinsichtlich des Verfahrens durch die Merkmale des Anspruchs 1 und bezüglich der Vorrichtung durch die Merkmale des Anspruchs 21 gelöst.

Der Erfindung liegt die Idee zugrunde, dass ausschließlich Torsionsschwingungen gedämpft werden, die im Betrieb einer Anlage, die einen Antriebsstrang mit einer elektrischen Maschine aufweist, problematisch sind. Problematisch sind dabei beispielsweise solche Torsionsschwingungen mit einer bestimmten Frequenz, die zu einem Schaden an Teilen der Anlage führen können. Dies hat den Vorteil, dass die eingesetzte Dämpfungsleistung minimiert werden kann.

Die Dämpfung erfolgt erfindungsgemäß entsprechend einer klassischen mechanischen Dämpfung. Die Dämpfung wird in Gegenphase zur Winkelgeschwindigkeit der Torsionsschwingung aufgebracht. Dies ist vorteilhaft, da auf diese Weise die Energie zielgerichtet für die Dämpfung der Torsionsschwingung verwendet wird. Die Torsionsschwingung eines Antriebsstranges lässt sich vereinfacht in Form der Differentialgleichung eines einfachen Torsionsschwingers darstellen:

$$I\Phi^{**} + c_\Phi\Phi^* + k_\Phi\Phi = 0.$$

Dabei ist $I$ das Massenträgheitsmoment des Schwingers, $c_\Phi$ die Konstante der Torsionsdämpfung und $k_\Phi$ die Konstante der Torsionsfeder. $\Phi$ ist die zeitabhängige Weggröße der Torsionsschwingung. Die erste Ableitung der Weggröße nach der Zeit ist die Winkelgeschwindigkeit $\Phi^*$ und die zweite Ableitung der Weggröße nach der Zeit ist die Winkelbeschleunigung $\Phi^{**}$. Ein Dämpfungsdrehmoment ist dann effektiv, wenn es das maximale Drehmoment beim Durchgang der Nulllage der Weggröße aufbringt, also in Gegenphase zur Winkelgeschwindigkeit.

Gedämpft wird vorzugsweise ein Antriebsstrang, der mindestens eine Maschine zur elektrisch-mechanischen Energiewandlung aufweist, wobei dies z.B. ein Generator und/oder ein Motor sein kann. Die Maschine kann eine Synchron- oder AsynchronMaschine sein. Der Antriebsstrang kann beispielsweise eine Dampfturbine mit angeschlossenem Generator, eine Windkraftanlage mit Generator, eine Wasserkraftturbine mit Generator oder ein Zwischenspeicher für elektrische Energie mit einem Schwungrad, einem Motor, der das Schwungrad antreibt, und einem Generator sein. Der Zwischenspeicher für elektrische Energie kann auch eine elektrische Maschine für den Antrieb und Abtrieb des Schwungrads aufweisen. Die elektrische Maschine kann beispielsweise auch ein Motor einer Walzanlage sein. Während des bestimmungsgemäßen Betriebes rotiert der Antriebsstrang der hier beschriebenen Anlagen üblicherweise kontinuierlich. Dabei kann er kontinuierlich mit konstanter Winkelgeschwindigkeit oder mit einer richtungstreuen veränderlichen Winkelgeschwindigkeit in einem Bereich zwischen zwei Winkelgeschwindigkeiten unter Einschluss von Ein- und Ausschaltvorgängen rotieren. Das erfindungsgemäße Verfahren kann auch bei Anlagen eingesetzt werden, bei denen es insbesondere darum geht, Schwingungen, die während des Ein- und/oder Ausschaltvorganges auftreten, zu dämpfen.

Die elektrische Maschine ist an einen elektrischen Mehrpol angeschlossen, der die Maschine antreiben und/oder von der Maschine Leistung entnehmen kann. Der Mehrpol kann ein Drehstromnetz oder ein einfaches Wechsel- oder Gleichstromnetz darstellen. Der Mehrpol kann ein öffentliches Versorgungsnetz oder ein fabrikinternes Versorgungsnetz sein. Wird mit der elektrischen Maschine ein starres Netz (z.B. öffentliches Versorgungsnetz) versorgt, so lässt sich die Wirkung der erfindungsgemäßen Dämpfung erhöhen, wenn das Versorgungsnetz von der elektrischen Maschine mit der Dämpfungsvorrichtung durch eine Induktivität (z.B. Drossel oder Transformator) vom starren Netz entkoppelt wird. Durch dieses Maßnahme wird vorteilhafterweise die Eingangsinduktivität des Versorgungsnetzes für die von der Dämpfungsvorrichtung bereitgestellte Wirkleistung erhöht. Entsprechendes gilt für eine elektrische Maschine, die aus einem starren Netz versorgt wird.

Erfindungsgemäß wird eine Abstimmung der Dämpfungsvorrichtung auf eine Resonanzfrequenz einer Torsionsschwingung vorgenommen, wodurch sich einerseits die Genauigkeitsanforderungen an die Messeinrichtung und andererseits die eingesetzte Leistung zur Dämpfung minimieren lassen. Die Dämpfung mit der Resonanzfrequenz besitzt ferner den folgenden Vorteil. Generatoranlagen mit den dazugehörigen Turbinen und bewegten Massen oder andere Anlagen mit elektrischen Maschinen vergleichbarer Größenordnung werden üblicherweise über Jahre hinweg nicht in ihrer Anordnung geändert. Deshalb ändern sich auch die Resonanzfrequenzen der Torsionsschwingungen des Antriebsstranges im wesentlichen nicht. Die Vorrichtung kann auf die tiefste Resonanzfrequenz des Antriebsstranges oder eine höhere Torsionsresonanzfrequenz abgestimmt sein. Die Abstimmung kann auch auf eine abweichende Frequenz, die z.B. bis zu 3% über- oder unterhalb einer Resonanzfrequenz liegt, erfolgen. Die Frequenzabstimmung kann bauartbedingt festgelegt und nicht regelbar sein. Es ist ausreichend, wenn die Regelung der erfindungsgemäßen Vorrichtung die Amplitude und die Phasenlage der Dämpfung regelt. Dadurch, dass die Vorrichtung auf eine Resonanzfrequenz abgestimmt wird, kann sich auch ein Kostenvorteil ergeben.

Vorteilhafterweise wird die Erfindung zur Torsionsdämpfung bei Antriebssträngen eingesetzt, deren Resonanztorsionsschwingung einen Gütefaktor von 500 oder mehr aufweist. Der Gütefaktor ist bei geringen Dämpfungen in guter Näherung indirekt proportional zum logarithmischen Dekrement einer Schwingung und beschreibt das Abklingverhalten. Das Verfahren kann auch vorteilhafterweise bei einem Gütefaktor von mehr als 300 oder 150 eingesetzt werden. Torsionsschwingungen, die einen solch hohen Gütefaktor aufweisen, treten typischerweise in großen, massereichen Anlagen auf.

Alternativ kann die Erfindung auch vorteilhaft bei Antriebssträngen eingesetzt werden, deren Resonanztorsionsschwingung einen Gütefaktor von unter 150 aufweist, beispielsweise in Produktionsanlagen. Werden Torsionsschwingungen in Produktionsanlagen erfindungsgemäß gedämpft, so bietet dies den Vorteil, dass die Fertigungsgenauigkeit erhöht wird.

Der Gütefaktor mit dem erfindungsgemäß aufgeprägten Dämpfungsdrehmoment liegt vorzugsweise unter 200. Der Gütefaktor mit aufgeprägtem Dämpfungsdrehmoment kann aber auch vorteilhafterweise darunter liegen, beispielsweise unter 150 oder unter 100. Auch ein Gütefaktor unter 70 ist möglich, je nach Wirkung der Dämpfung. Ein niedriger Gütefaktor hat den Vorteil, dass die Schwingung schnell abklingt.

In einer bevorzugten Ausführungsform der Erfindung wird die Amplitude oder die Leistung des Dämpfungsdrehmoments in Abhängigkeit von einer Regelgröße geregelt. Als Eingangsgröße verwendet der Regler eine Regelgröße, welche die mechanische Belastung durch Torsion (Torsionsbeanspruchung) an mindestens einer Stelle des Antriebsstranges repräsentiert. Vorzugsweise wird die Torsionsbeanspruchung des Antriebsstrangs an mindestens einer Stelle gemessen, an der die mechanische Belastung maximal ist. Dadurch können Torsionsschwingungen besonders genau und fehlerfrei detektiert werden. Insbesondere bei Antriebssträngen mit großen Durchmessern kann die Torsionsbeanspruchung durch eine Resonanzschwingung auch bei relativ kleinen Torsionswinkeln sehr hoch sein. Die Messung der mechanischen Beanspruchung an einer geeigneten Stelle bietet daher gegenüber einer bloßen Winkelgeschwindigkeitsmessung an der Welle der elektrischen Maschine Vorteile, obwohl auch bei geeigneter Signalaufbereitung eine Messung der Winkelgeschwindigkeit an der Maschine vorgesehen sein kann. Die Torsionsbeanspruchung als Regelgröße für die Stärke der Dämpfung zu verwenden, hat den Vorteil, dass die aufgebrachten Drehmomente zur Dämpfung der Torsionsschwingung gezielt eingesetzt werden und bei geeigneter Einstellung des Reglers nicht zu einer Überkompensation, d.h. zu einer Schwingungsanregung führen.

Die Regelgröße kann aus dem Messsignal eines Sensors oder aus den Messsignalen mehrerer Sensoren ermittelt werden. Mehrere Sensoren können dabei den Vorteil haben, dass durch geeignete Signalaufbereitung der Sensoren Störgrößen ausgefiltert werden können. Ein Sensor kann den Vorteil haben, dass dieser einen geringeren Aufwand für den Auf- und Einbau der Messeinrichtung bedingt. Beim Einsatz mehrerer Sensoren werden diese vorzugsweise an verschiedenen Positionen des Antriebsstrangs angebracht. Dabei können die verschiedenen Positionen azimuthal oder axial bezüglich des Antriebsstrangs zueinander beabstandet sein. So ist z.B. eine Anordnung von zwei Torsionsdehnungsmesssensoren auf zwei gegenüberliegenden Positionen des Antriebsstranges vorteilhaft, dergestalt dass die beiden Sensoren einen Azimuthalwinkel von 180° einschließen.

Bei geeigneter Verarbeitung der Ausgangssignale der Sensoren können so Störgrößen, die durch eine über den Umfang variierende Eigenschaft der Antriebswelle bedingt sind, ausgefiltert werden. Bei geeigneter Signalaufbereitung sind auch andere, Azimuthalwinkel möglich, beispielsweise 30° oder 90°. Vorzugsweise können auch mehrere Sensoren axial zueinander beabstandet angebracht werden. Axial voneinander beabstandete Torsionsdehnmesssensoren sind insbesondere vorteilhaft, wenn zunächst die exakte Eigenform der Resonanztorsionsschwingung und der Ort der höchsten mechanischen Beanspruchung unbekannt sind.

Wird die Messung der Torsionsbeanspruchung mit Hilfe einer oder mehrerer Winkelgeschwindigkeitsmesssensoren vorgenommen, bieten zwei axial voneinander beabstandete Winkelgeschwindigkeitsmesseinrichtungen besondere Vorteile, da auf diese Weise aus dem Differenzsignal die Torsionsbeanspruchung der zwischen den beiden Sensoren liegenden Teile des Antriebsstranges ermittelt werden kann.

Die Winkelgeschwindigkeit der Welle der elektrischen Maschine ist im kontinuierlichen Betrieb Veränderungen unterworfen, die auch bei minimaler Größe die Ermittlung der Torsionsbeanspruchung stark erschweren oder unmöglich machen können. Dabei ist zu berücksichtigen, dass die Winkelgeschwindigkeit aufgrund der Torsionsschwingung gegenüber der konstanten Winkelgeschwindigkeit der Welle sehr klein ist. So sind bei großen Generatoranlagen Winkelgeschwindigkeiten von über 1000 Umdrehungen/Minute üblich. Wegen der durch die dicken Antriebsstränge bedingten hohen Torsionsfedersteifigkeiten kommt es bei den Torsionsschwingungen nur zu kleinen Auslenkungen. In Verbindung mit der oft niedrigen Frequenz der ersten Resonanztorsionsschwingung, z.B. zwischen 10 und 40 Hz, führt dies zu geringen Winkelgeschwindigkeiten der Torsionsschwingung. Diese geringen Torsionswinkelgeschwindigkeiten können messtechnisch ein großes Problem darstellen. Deshalb ist die Messung über ein Differenzsignal zweier voneinander axial beabstandeten Sensoren vorteilhaft. Bei Einsatz eines ausreichend genauen Sensors in Verbindung mit einer sehr guten Signalaufbereitung ist es jedoch auch möglich, nur einen Sensor zu verwenden.

Vorteilhafterweise kann die Erfindung mit verschiedenen Sensortypen realisiert werden. Wird die Messung der Torsionsbeanspruchung mit Hilfe von Winkelgeschwindigkeitssensoren durchgeführt, so können alle an sich bekannten optischen Winkelgeschwindigkeitssensoren eingesetzt werden. Diese besitzen die Vorteile, dass sie berührungslos messen, in der Anwendung erprobt sind und außerdem kostengünstig sind.

Vorzugsweise wird die Torsionsbeanspruchung jedoch direkt gemessen. Dazu können z.B. Dehnmessstreifen verwendet werden, die auf der Welle befestigt, z.B. aufgeklebt werden. Hierbei sind aufgrund der geringen Dehnungen insbesondere bei Wellen mit großen Durchmessern lange Dehnmessteifen mit mehreren parallel liegenden Bahnen sinnvoll. Mit Dehnmessstreifen wird direkt die mechanische Beanspruchung gemessen, was einen Vorteil gegenüber indirekten Messungen bedeuten kann.

Vorzugsweise wird eine berührungslose Messung der Torsionsbeanspruchung vorgenommen, beispielsweise durch einen magnetostriktiven Sensor. So sind aus der Praxis verschiedene Sensoren zur magnetostriktiven Messung der Torsionsbeanspruchung bekannt, z.B. der "Berührungslose Drehmomentsensor" des Fraunhofer Instituts für Techno- und Wirtschaftsmathematik in Kaiserslautern (Datenblatt Fraunhofer ITWM 2001). Für den Einsatz an großen Wellen sind magnetostriktive Sensoren wegen ihrer hohen Genauigkeit besonders vorteilhaft. Um Störeffekte, die beispielsweise durch mit der Welle umlaufenden Materialinhomogenitäten verursacht werden können, auszuschließen, können mehrere Sensoren in Umfangsrichtung der Welle angebracht werden.

Das Messsignal des Sensors oder der Sensoren wird verarbeitet, um zur Regelung der Dämpfung eingesetzt zu werden. Vorzugsweise wird aus der Regelgröße, die aus dem Messsignal eines oder mehrerer Sensoren gewonnen wurde, eine Rückführgröße abgeleitet. Die Rückführgröße stellt dabei vorzugsweise die von der Resonanztorsionsschwingung verursachte Winkelgeschwindigkeit dar. Wird diese Winkelgeschwindigkeit, wie oben beschrieben, direkt aus der Differenz des Signals zweier Winkelgeschwindigkeitsmesssensoren ermittelt, so wird dieses Signal vorteilhafterweise nur noch gefiltert, um die Rückführgröße zu erhalten. Eventuell sind weitere Verfahrensschritte vorgesehen, um Störgrößen auszublenden. Wird die Torsionsbeanspruchung direkt gemessen, so können die ermittelten Weggrößen abgeleitet werden, um eine der Winkelgeschwindigkeit der Torsionsschwingung entsprechende Größe zu erhalten. Vorteilhafterweise wird dazu das gefilterte Messsignal phasenverschoben und invertiert. Beträgt die gesamte Phasenverschiebung im Regelkreis im Wesentlichen 90°, so entsteht mit der Invertierung eine Größe, die in Gegenphase zur Winkelgeschwindigkeit der Torsionsschwingung steht. Wird das Signal vor oder nach der Phasenverschiebung und Invertierung mit einem Filter bearbeitet, der darauf ausgelegt ist, dass das ausgegebene Signal hauptsächlich ein Schwingungssignal entsprechend einer Resonanztorsionsfrequenz des Antriebsstranges ist, bietet dies den Vorteil, dass die Dämpfungsvorrichtung die eingesetzte Leistung hauptsächlich oder ausschließlich zur Dämpfung der Resonanztorsionsschwingung verwendet.

Die Dämpfung der Torsionsschwingung geschieht bei dem erfindungsgemäßen Verfahren mit der erfindungsgemäßen Dämpfungsvorrichtung dadurch, dass Wirkleistung in der Maschine verursacht wird. Dadurch wird die Maschine je nach Phasenlage der Torsionsschwingung und des Dämpfungsdrehmoments abgebremst oder beschleunigt. Erfindungsgemäß wird ein Energiezwischenspeicher verwendet, in dem Energie, die der elektrischen Maschine in einer Bremsphase entnommen wird, zwischengespeichert wird, um sie der Maschine in der nächsten Beschleunigungsphase wieder als Wirkleistung aufzuprägen. Die Energie kann jedoch alternativ einem anderen Energieträger entnommen werden. Ist der an die elektrische Maschine angeschlossene Mehrpol ein Wechselstromkreis, so wird erfindungsgemäß als Energiezwischenspeicher ein Gleichstromkreis mit Schwingungsanteil, welcher auch als Wechselstromanteil bezeichnet werden kann, verwendet.

Als Energiezwischenspeicher im Gleichstromkreis eignet sich besonders eine Spule, da diese vorteilhafterweise ein hohes Energiespeichervermögen hat. Es ist alternativ möglich, im Gleichstromkreis eine Anordnung von Kapazitäten und/oder Induktivitäten und/oder zusätzlichen ohmschen Widerständen als Energiezwischenspeicher zu verwenden.

Wird als Energiezwischenspeicher eine Spule verwendet, so ist diese Spule vorteilhafterweise eine Spule mit oder ohne Eisenkern, die luft- oder wassergekühlt ist. Diese zeichnen sich gegenüber beispielsweise supraleitenden Spulen durch wesentlich geringere Anschaffungskosten und Unterhaltskosten aus. Es ist jedoch auch möglich, eine andere, als die hier genannten Spulen zu verwenden. Auch eine Kombination von Spulen ist möglich. Vorzugsweise beträgt die Gesamtinduktivität der mindestens einen Spule weniger als 5 mH. Durch die Verwendung von Spulen mit geringer Induktivität lassen sich Kosteneinsparungen und eine kompakte Bauform der Dämpfungsvorrichtung erzielen. Bei größeren Anlagen oder tiefen Resonanzfrequenzen können auch größere Spulen, beispielsweise bis 10 mH oder auch 20 mH oder darüber (z. B. 50 mH) vorteilhaft sein. Bei bestimmten Anwendungen können auch Gesamtinduktivitäten kleiner als 3 mH oder auch 1 mH ausreichend und vorteilhaft sein. Ein weiterer, besonders wichtiger Vorteil der Verwendung von kleinen Induktivitäten besteht in der Möglichkeit, die Spule schnell aufladen zu können. Der Stromaufbau in der Spule kann innerhalb kurzer Zeit zum Beispiel innerhalb weniger Millisekunden erfolgen. Die Spule muss nicht dauernd stromdurchflossen vorgehalten werden und kann gegebenenfalls erst beim Auftreten einer Resonanztorsionsschwingung bereits während der ersten Periode geladen werden. Die Dämpfungsvorrichtung kann somit Verluste ersparen, die beim Vorhalten der stromdurchflossenen Spule auftreten würden.

Vorteilhafterweise wird der Gleichstromkreis über einen Stromrichter an den Wechselstromkreis angeschlossen. Dies ist im Falle eines Drehstromkreises mit einer Netzfrequenz über der zu dämpfenden Resonanztorsionsfrequenz vorzugsweise eine 6-Puls-Brückenschaltung. Es ist jedoch alternativ möglich, eine 12-Puls-Brückenschaltung oder andere Schaltungen zu verwenden. Liegt die Torsionsresonanzfrequenz über der Netzfrequenz des Wechselstromkreises, so können andere Stromrichter als die genannten sinnvoll sein. Im Falle einer 6-Puls-Brückenschaltung oder anderer thyristorbestückter Stromrichter kann der Gleichstromkreis über eine geeignete Zündwinkelansteuerung der Thyristoren stromgeregelt werden. Dabei erfolgt die Thyristoransteuerung nach an sich bekannten Methoden der Stromrichtertechnik.

In einer weiteren bevorzugten Variante der Erfindung wird ein Kondensator als Energiespeicher auf der Gleichstromseite des Stromrichters verwendet. Dies hat den Vorteil, dass die Gleichstromseite spannungsgesteuert betrieben werden kann und beispielsweise auch IGBT-Transistoren im Stromrichter eingesetzt werden können. Dies bietet den Vorteil, dass die Ventile des Stromrichters unabhängig von der Netzfrequenz auf der Wechselstromseite des Stromrichters schaltbar sind und dadurch Wirkleistung mit nahezu jeder beliebigen Frequenz, auch deutlich oberhalb, beispielsweise zweifach, der Netzfrequenz, im Mehrpol geleistet werden kann. Die Spannungssteuerung des IGBT-Stromrichters erfolgt auf eine an sich aus dem Stand der Technik bekannte Weise.

Eine vorteilhafte Alternative stellen auch GTO-Thyristoren dar, die stromgesteuert arbeiten und abschaltbar sind. Bei GTO-Thyristoren können vorteilhafterweise Spulen als Energiespeicher eingesetzt werden. Da GTO-Thyristoren abschaltbar sind, ist es möglich, Wirkleistung mit deutlich höheren Frequenzen als der Netzfrequenz zu erzeugen. GTO-Thyristoren bieten auch den Vorteil, dass sie preisgünstig sind. Für GTO-Thyristoren wird im allgemeinen eine leistungsfähigere Steuerschaltung als für Thyristoren benötigt, da zum Abschalten ein hoher Steuerstrom nötig ist. Die Erfindung wird vorzugsweise zur Dämpfung einer Torsionsschwingung an einem Antriebsstrang mit einer elektrischen Maschine, die eine Synchronmaschine ist, eingesetzt. Dies hat den Vorteil, dass über die Drehzahl der Synchronmaschine die Netzfrequenz festgelegt ist. Damit kann bei bekannter Frequenz der Torsionsschwingung und bekannter Netzfrequenz oder bekanntem Netzfrequenzbereich der Stromrichter geeignet ausgelegt werden. Falls die Netzfrequenz in einem Bereich über der zu dämpfenden Torsionsfrequenz liegt, lassen sich beispielsweise die oben genannten 6- oder 12-Puls-Brücken-schaltungen verwenden.

Je nach Anwendungsfall kann die Anwendbarkeit des Verfahrens bei der Asynchronmaschine oder der Synchronmaschine einen zusätzlichen technischen Aufwand erfordern, beispielsweise bei einem drehzahlveränderlichen Antrieb. Dieser Aufwand betrifft die Anpassung des Stromrichters an die ggf. in einem größeren Bereich veränderliche Netzfrequenz.

Vorteilhafterweise wird der Stromrichter mit seiner wechselstromseitigen Seite galvanisch vom Wechselstromkreis getrennt. Dies hat den Vorteil, dass die Spannung auf der Seite des Stromrichters über das Übersetzungsverhältnis des Transformators eingestellt werden kann. Diese Einstellung erfolgt in Abhängigkeit von der Spannung im Wechselstromkreis, an dem die elektrische Maschine angekoppelt ist. Es ist auch eine Anordnung ohne galvanische Trennung möglich, wobei sich Vorteile aus dem Verzicht auf den Transformator ergeben können.

Aus der Rückführgröße des Regelkreises wird durch geeignete Maßnahmen ein Sollwert für die Phasenanschnittsteuerung der Stromregelung oder der Spannungsregelung des Gleichstromkreises gebildet. Vorteilhafterweise wird dazu ein Schwingungsanteil oder Wechselanteil, der die Rückführgröße repräsentiert und dementsprechend eine Frequenz aufweist, die im Wesentlichen der zu dämpfenden Resonanztorsionsfrequenz entspricht, mit einem Gleichstromanteil oder Gleichanteil addiert. Wird nun mit dem so gebildeten Sollwert der Stromrichter angesteuert, so wird entsprechend dem Schwingungsanteil des Sollwerts Dämpfungsleistung in der Maschine verursacht.

Die Stärke der Dämpfung kann vorteilhafterweise geregelt werden, indem die Amplitude des Schwingungsanteils des Sollwerts gesteuert wird. Je größer der Schwingungsanteil, um so mehr Energie wird in jeder Torsionsschwingungs-Phase der Maschine entzogen und wieder zugeführt. Außerdem kann die Dämpfungsleistung über die Größe des Gleichstromanteils eingestellt werden. Dadurch ist es vorteilhafterweise auch möglich, eine maximale Dämpfungsleistung vorzugeben, da die maximal speicherbare Energie in jeder Phase vom Gleichstromanteil abhängig ist. Die Steuerung des Gleichstromanteils bietet besondere Vorteile bei der erstmaligen Einrichtung und Inbetriebnahme der Dämpfungsvorrichtung an einer neuen oder an einer bereits bestehenden Anlage. Vorzugsweise wird der Gleichstromkreis stromlos geschaltet, wenn keine Torsionsschwingung auftritt. Auch nach dem Ausklingen einer Torsionsschwingung kann der Gleichstromkreis stromlos geschaltet werden, gegebenenfalls nach einer Wartezeit.

Die Dämpfungsvorrichtung ist darauf ausgelegt, Wirkleistung mit der Frequenz einer Torsionsresonanzfrequenz der Antriebswelle in der elektrischen Maschine zu leisten. Dies könnte bei nicht funktionierendem Regelkreis innerhalb kurzer Zeit zu schweren Schäden an der Anlage führen. Deshalb ist für die Betriebssicherheit der Dämpfungsvorrichtung die Stromregelung im Gleichstromkreis von besonderem Vorteil, da dadurch bei kleinem Gleichstromanteil und entsprechend geringer maximaler Wirkleistung die Funktionsfähigkeit des Regelkreises und der gesamten Dämpfungsvorrichtung überprüft werden können. Im Betrieb ermöglicht die Stromregelung eine Beschränkung der Dämpfungsleistung, wodurch eine Überlastung des Stromrichters und/oder der Spule und/oder anderer Teile verhindert werden kann.

Die Dämpfungsvorrichtung kann vorteilhafterweise bei einer sehr geringen Leistung betrieben werden. Dies hat den Vorteil, dass alle Komponenten im Bereich des Stromrichters und des Gleichstromkreises kostengünstig ausgelegt werden können. Vorzugsweise ist die Dämpfungsvorrichtung darauf ausgelegt, maximal 5% der von der Maschine elektrisch-mechanisch gewandelten Leistung als Dämpfungsleistung einzusetzen. Dies ist in den meisten Anwendungsfällen ausreichend, da mit der Dämpfungsvorrichtung nur die Schwingungen im Frequenzbereich der Resonanz bedämpft werden. Es ist alternativ möglich, die Anlage auf maximal 1% oder 3% der von der Maschine gewandelten Leistung auszulegen. Es kann aber auch eine Auslegung auf 10% oder 20% sinnvoll sein.

Das Verfahren und die Dämpfungsvorrichtung sind besonders geeignet für Anlagen mit elektrischen Maschinen, bei denen die Masse der rotierenden Antriebswelle mit den daran befestigten mitrotierenden Teilen mehr als 20 Tonnen beträgt. Die Torsionsschwingungseigenschaften werden wesentlich durch die Massenträgheitsmomente der an der Antriebswelle montierten Teile bestimmt. Tiefe Resonanzfrequenzen bei geringer Dämpfung, für die das erfindungsgemäße Verfahren besonders geeignet ist, treten bevorzugt bei Antriebssträngen mit großen Massenträgheitsmomenten auf. So ist der Einsatz des Verfahrens und der Vorrichtung zur Dämpfung besonders vorteilhaft, wenn das Gesamtmassenträgheitsmoment des Antriebsstranges mit den daran montierten Teilen mehr als 5000 kgm$^2$ beträgt. Der Einsatz kann aber auch bei geringeren, z.B. über 1000 kgm$^2$, Massenträgheitsmomenten sinnvoll sein. Insbesondere eignet sich das Verfahren für sehr große Massenträgheitsmomente von über 20 000 oder 80 000 kgm$^2$. So ist der Einsatz besonders vorteilhaft bei Gesamtmassen der rotierenden Teile eines Antriebsstranges von über 40 oder 100 Tonnen.

Tiefe Resonanzfrequenzen, die mit der erfindungsgemäßen Dämpfungsvorrichtung vorteilhaft gedämpft werden können, können aber auch bei wesentlich niedrigeren Massen des Antriebsstrangs auftreten. Die Resonanzfrequenz ist nicht nur vom Massenträgheitsmoment der rotierenden Massen, sondern auch von den Torsionsfedersteifigkeiten der die rotierenden Massen verbindenden Wellen abhängig. So ist auch bspw. bei Papier- oder Druckmaschinen, die rotierende Massen von einer bis fünf Tonnen aufweisen können, ein Auftreten von tiefen Resonanzfrequenzen möglich, da die Torsionsfedersteifigkeiten der Wellen entsprechende Werte aufweisen.

Bei großen Anlagen wird die Dämpfungsvorrichtung vorteilhafterweise in ein Regel- und mehrere Leistungsmodule getrennt, wodurch über die Anzahl baugleicher Leistungsmodule die Gesamtdämpfungsleistung skalierbar ist. Die Module sind derart ausgelegt, dass ein Regelmodul mehrere Leistungsmodule ansteuern kann. Die Leistungsmodule bestehen jeweils aus einem Stromrichter, eventuell einem Transformator zur galvanischen Trennung vom Netz, einem an den Stromrichter angeschlossenen Gleichstromkreis mit Energiezwischenspeicher, vorzugsweise in Form einer Spule, und der Zündwinkelsteuerung. Alternativ kann die Zündwinkelsteuerung auch im Regelmodul enthalten sein. Das Regelmodul beinhaltet alle-für die Signalaufbereitung vorgesehenen Vorrichtungen und weist eingangsseitig Anschlüsse für einen oder mehrere Sensoren auf. Mit diesem Aufbau können vorteilhafterweise bestehende Dämpfungsvorrichtungen durch das zusätzliche Installieren von Leistungsmodulen in ihrer maximalen Leistung verstärkt werden.

Befinden sich mehrere elektrische Maschinen in einem Netz, d.h. sind mehrere elektrische Maschinen an den selben Mehrpol angeschlossen, so können Resonanztorsionsschwingungen in den Antriebssträngen der einzelnen elektrischen Maschinen vorteilhafterweise getrennt bedämpft werden, falls die Antriebsstränge unterschiedliche Torsionsresonanzfrequenzen aufweisen. Dafür ist für jede Torsionsresonanzfrequenz eines Antriebsstranges einer elektrischen Maschine im Netz eine Dämpfungsvorrichtung vorgesehen, die auf die jeweilige Torsionsresonanzfrequenz abgestimmt ist. Die Leistung die zur Dämpfung in das Netz eingebracht wird, um die Torsionsschwingung einer Antriebswelle zu dämpfen, ist unschädlich für den Antriebsstrang einer anderen elektrischen Maschine in demselben Netz, da dort keine Resonanzschwingung angeregt werden kann, falls die Torsionsresonanzfrequenzen der Antriebsstränge unterschiedlich sind.

In einer vorteilhaften Ausführungsform ist die erfindungsgemäße Dämpfungsvorrichtung dazu geeignet, mehrere Torsionsschwingungen mit verschiedenen Frequenzen eines rotierenden Antriebsstranges zu dämpfen. Dazu enthält das dem Antriebsstrang aufgeprägte Dämpfungsdrehmoment Frequenzanteile verschiedener vorgegebener Frequenzen, wobei die Frequenzanteile in Gegenphase zu den Winkelgeschwindigkeiten der verschiedenen Torsionsschwingungen liegen. Dies hat den Vorteil, dass auch mehrere tiefe Torsionsschwingungen, die im Betrieb des Antriebsstrangs eine Gefahr darstellen können, auf günstige Weise gedämpft werden können. Dazu verfügt die Dämpfungsvorrichtung vorteilhafterweise über mehrere Messeinrichtungen, mit denen für verschiedene Torsionsschwingungen des Antriebsstrangs mit verschiedenen Frequenzen jeweils Rückführgrößen ermittelbar sind. Die mehreren Messeinrichtungen können mit einem oder mehreren Sensoren verbunden sein. Beispielsweise kann vorgesehen sein, dass jede Messeinrichtung mit einem zugehörigen Sensor oder mit mehreren zugehörigen Sensoren verbunden ist. Dies hat den Vorteil, dass die Sensoren getrennt auf die jeweiligen Messeinrichtungen und die von den Messeinrichtungen zu messenden Frequenzen abgestimmt sein können. Alternativ kann vorgesehen sein, dass mehrere Messeinrichtungen gemeinsam das Signal eines oder mehrerer Sensoren verwenden. Dies hat den Vorteil, dass nicht für jede Messeinrichtung ein eigener Sensor oder mehrere Sensoren angeordnet werden müssen.

Vorzugsweise entsprechen zumindest einige der vorgegebenen Frequenzen, mit denen die mehreren Torsionsschwingungen des Antriebsstrangs gedämpft werden, im Wesentlichen Resonanzfrequenzen des Antriebsstrangs. Dies hat den Vorteil, dass die eingesetzte Leistung zur Dämpfung minimiert werden kann, da die Dämpfungsleistung für Torsionsschwingungen eingesetzt wird, die im Betrieb der Anlage eine Gefahr darstellen. Mehrere verschiedene Resonanzfrequenzen, die besonders vorteilhaft mit der erfindungsgemäßen Dämpfungsvorrichtung gedämpft werden können, treten bspw. an Turbogeneratoren auf, die über mehrere Turbinen bspw. eine Hochdruck-, eine Mitteldruck- und zwei Niederdruckturbinen verfügen. Jede der Turbinen, der Generator selbst und eventuell noch weitere Teile stellen rotierende Massen dar, die durch Wellen verbunden sind. Eine solche Anordnung weist oftmals mehrere Schwingungseigenformen mit einer tiefen Resonanzfrequenz auf. Eine tiefe Resonanzfrequenz ist bspw. eine Frequenz unter 50 Hz oder unter 100 Hz. Die dazugehörigen Schwingungseigenformen zeichnen sich dadurch aus, dass eine oder mehrere rotierende Massen gegenüber den anderen rotierenden Massen schwingen. So können bspw. bei dem beschriebenen Turbogenerator die Hochdruck- und die Mitteldruckturbine gegenüber den anderen Turbinen oder die Hochdruck-, die Mitteldruck- und eine Niederdruckturbine gegenüber der anderen Niederdruckturbine und dem Generator mit tiefen Resonanzfrequenzen schwingen. Um die verschiedenen Torsionsschwingungen möglichst genau zu erfassen, wird jeweils einer oder mehrere Sensoren an den Stellen des Antriebsstrangs angeordnet, an denen die durch die Torsionsschwingungen hervorgerufenen Verformungen maximal sind. Beispielsweise ist eine Anordnung der Schwingungssensoren jeweils an den Wellen zwischen den rotierenden Massen vorteilhaft, da dort die größten Verformungen bei den Schwingungseigenformen der Resonanzfrequenzen zu erwarten sind. Vorzugsweise wird die auf eine vorgegebene Resonanzfrequenz abgestimmte Messeinrichtung mit dem oder den Sensoren verbunden, die an der Stelle angeordnet sind, an der die durch die Torsionsschwingung mit der entsprechenden Resonanzfrequenz hervorgerufene Verformung maximal ist. Dies hat den Vorteil, dass im Bereich der Messeinrichtungen ein minimaler Aufwand zur Weiterverarbeitung der die Regelgrößen darstellenden Sensorsignale nötig ist.

Vorzugsweise werden aus den mehreren Regelgrößen mit den Messeinrichtungen mehrere Rückführgrößen gebildet, wobei jede Rückführgröße eine Frequenz aufweist, die im Wesentlichen gleich der Frequenz der entsprechenden Torsionsschwingung ist. Die Amplitude der einzelnen Rückführgrößen richtet sich nach der Stärke der dieser Rückführgröße zuordenbaren Torsionsschwingung. Dies hat den Vorteil, dass jede der zu dämpfenden Torsionsschwingungen mit der richtigen Stärke gedämpft wird und es nicht zu einer Überkompensation, d. h. einer Schwingungsanregung kommt. Vorteilhafterweise kann auch eine Messeinrichtung nur dann eine Rückführgröße ausgeben, falls eine Torsionsschwingung mit der entsprechenden Frequenz und einer Amplitude über einem vorher festgelegten Schwellwert auftritt. Dies hat den Vorteil, dass die Dämpfungsvorrichtung nur dann eingesetzt wird, falls tatsächlich eine Schwingung auftreten könnte, die einen Nachteil im Betrieb darstellen würde. Vorteilhafterweise weist die Dämpfungsvorrichtung einen Rückführgrößenaddierer auf, der die von den Messeinrichtungen ausgegebenen Rückführgrößen addiert und dessen Ausgang mit dem Eingang des Addierers des Reglers verbunden ist. In dem Addierer des Reglers wird zu der Summe der Rückführgrößen der die Amplitude der Dämpfungsleistung beeinflussende Gleichstromanteil addiert. Der Rückführgrößenaddierer hat den Vorteil, dass für verschiedene zu dämpfende Schwingungen nur ein Leistungsmodul nötig ist. Alternativ kann vorgesehen sein, mehrere Leistungsmodule zu verwenden, wobei bspw. ein Leistungsmodul Torsionsschwingungen der tiefsten Resonanzfrequenz und ein weiteres Leistungsmodul Torsionsschwingungen der beiden darüber liegenden Resonanzfrequenzen dämpft.

Am Ausgang des Addierers wird die Summe der Rückführgrößen und des Gleichstromanteils ausgegeben, wobei diese Summe den Sollwert für den Stromrichter darstellt.

Alternativ ist es auch möglich, die Aufgaben der Messeinrichtung durch einen Computer mit Analog-Digital- und Digital-Analog-Wandler auszuführen. Dies bietet den Vorteil, dass die Signalaufbereitung einschließlich der Filterung und der Phasenverschiebung mit geringem Aufwand adaptierbar ist. Auch die Summierung der Rückführgrößen und die Addierung des Gleichstromanteils kann digital erfolgen. Dies hat den Vorteil, dass der Computer die Funktion der vielen einzelnen Elemente übernimmt und dadurch der Aufbau der Dämpfungsvorrichtung einfacher wird. Dagegen bietet der Aufbau aus analogen Einzelelementen den Vorteil, dass die Filterung und Phasenverschiebung unabhängig von der Rechenauslastung eines Computers zuverlässig innerhalb einer vorgegebenen Zeitspanne ausgeführt werden.

Die Erfindung kann vorteilhaft insbesondere zur Dämpfung einer Torsionsschwingung oder einer Resonanztorsionsschwingung in einem Antriebsstrang eines Wind- oder Turbogenerators, eines Schiffsantriebs, eines Helikopterantriebs oder eines Aufzugsantriebs oder in einer Königswelle eingesetzt werden. Dazu sind jeweils lediglich fachmännische Anpassungen der Dämpfungsfrequenz und der Dämpfungsleistung an die jeweilige Anwendung erforderlich.

Die Erfindung wird nachfolgend anhand der Zeichnungen näher erläutert. Es zeigen:

Figur 1      eine schematische Darstellung eines beispielhaften Aufbaus einer Dämpfungsvorrichtung,

Figur 2      die Darstellung mehrerer im Betrieb einer Dämpfungsvorrichtung aufgezeichneter Daten,

Figur 3      eine schematische Darstellung eines weiteren beispielhaften Aufbaus einer Dämpfungsvorrichtung,

Figur 4      eine schematische Darstellung einer Ausführungsform der Erfindung für eine Königswelle,

Figur 5      eine schematische Darstellung einer weiteren Ausführungsform der Erfindung für die Welle eines Schiffsantriebs und

Figur 6      eine schematische Darstellung einer alternativen Ausführungsform eines Leistungsteils der Erfindung.

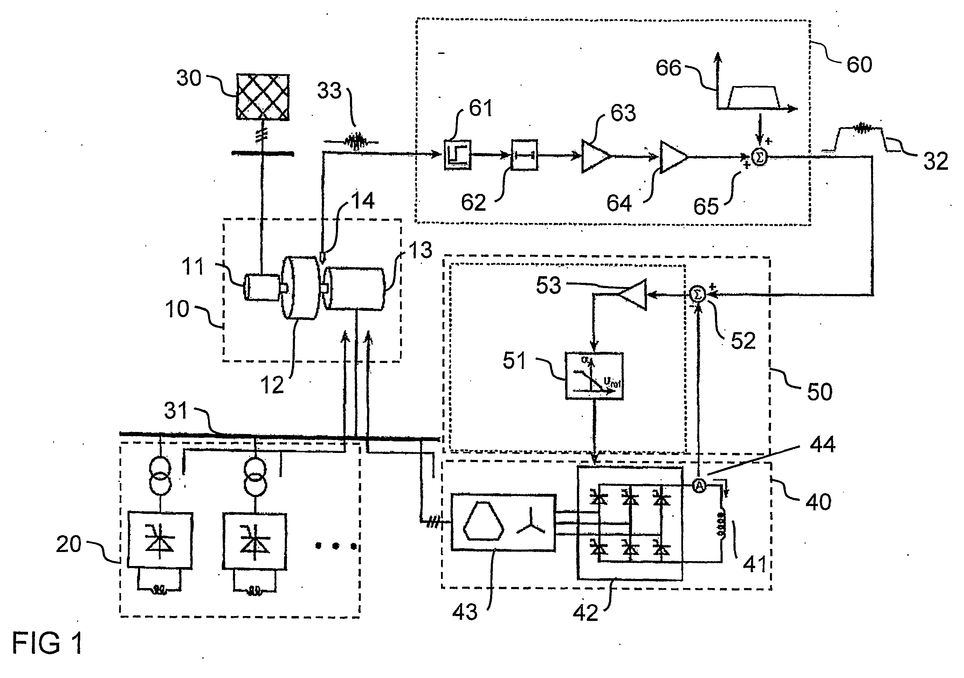

In Figur 1 ist zentral eine Energieversorgungseinheit 10 dargestellt, die insbesondere für die Versorgung stark schwankender elektrischer Lasten von Verbrauchern 20 eingesetzt wird. Die Energieversorgungseinheit 10 enthält einen Motor 11, der mit elektrischer Energie aus einem öffentlichen Netz 30 einen Antriebsstrang antreibt, an dem weiterhin eine Schwungmasse 12 und ein Generator 13 montiert sind. Der Generator 13 gibt eine Leistung von 140 MVA (Kurzzeitnennleistung) oder rund 20 bis 30 MVA (Dauerleistung) ab. Der Generator 13 wandelt die mechanische Energie der Schwungmasse 12 in elektrische Energie und speist diese in ein vom öffentlichen Netz 30 getrenntes Versorgungsnetz 31 ein. Das Versorgungsnetz 31 ist ein Drehstromnetz, das bei Netzfrequenzen zwischen 85 Hz und 110 Hz betrieben wird.

Die Resonanzfrequenz des Antriebsstranges bei der ersten Torsionsschwingungs-Eigenform beträgt im Beispiel etwa 25 Hz. Bei dieser Eigenform verdreht sich die Welle des Generators 13 gegenüber der Welle der Schwungmasse 12. Die höchste Torsionsbeanspruchung tritt also in dem Antriebsstrang im Bereich zwischen der Schwungmasse 12 und dem Generator 13 auf. Es können weitere Torsionsschwingungs-Eigenformen des Antriebsstrangs mit höheren Resonanzfrequenzen existieren, die aber mit der in Figur 1 gezeigten Dämpfungsvorrichtung nicht gedämpft werden sollen.

Die Torsionsschwingungen werden angeregt durch Lastwechsel der Verbraucher 20, die über das Versorgungsnetz 31 mit elektrischer Energie vom Generator 13 versorgt werden. An dem Versorgungsnetz 31 ist außerdem die erfindungsgemäße Dämpfungsvorrichtung angeschlossen, die ein Leistungsmodul 40, eine Steuerung 50, einen Sollwertgeber 60 und einen Sensor 14 aufweist.

Die mechanische Belastung aufgrund der Torsionsschwingung wird im Beispiel mit dem Sensor 14 erfasst, der den magnetostriktiven Effekt auf Grund der mechanischen Belastung durch die Torsion ausnutzt. Der Sensor 14 liefert ein Signal 33, dessen Verlauf sich aus der Schwingungsamplitude der Torsionsschwingung und gegebenenfalls Störgrößen zusammensetzt. In der Messeinrichtung, die einen Filter 61, einen Phasenschieber 62, einen Inverter 63 und einen Verstärker 64 aufweist, wird das Signal 33 gefiltert, phasenverschoben, invertiert und verstärkt. Die dadurch ermittelte Rückführgröße ist ein Schwingungssignal mit der Frequenz der Resonanzfrequenz der Torsionsschwingung, dessen Amplitude der Stärke der Resonanztorsionsschwingung entspricht. Die Rückführgröße wird zur Bildung eines Sollwertes 32 für die Steuerung 50 der Leistungseinheit 40 in einem Addierer 65 mit einem einstellbaren Gleichstromanteil 66 addiert. Der Gleichstromanteil 66 wird in Abhängigkeit vom Betriebszustand der Dämpfungsvorrichtung eingestellt oder manuell vorgegeben. Beim Auftreten einer Torsionsschwingung kann der Gleichstromanteil 66 auch in Abhängigkeit von der gemessenen Amplitude der Torsionsschwingung eingestellt werden.

Die Steuerung 50 steuert die Leistungseinheit 40 so an, dass diese über das Versorgungsnetz 31 Wirkleistung in dem Generator 13 leistet. Die Wirkleistung wird durch den Gleichstrom- und den Wechselstromanteil bestimmt. Im einzelnen wird über einen Verstärker 53 eine Zündwinkelsteuerung 51 angesteuert, die mit einem Stromrichter 42 in der Leistungseinheit 40 verbunden ist. Der Stromrichter 42 besteht aus einer 6-Puls-Brückenschaltung mit Thyristoren. Die Zündwinkelsteuerung 51 steuert die 6-Puls-Brückenschaltung 42 im herkömmlichen Zündsteuerungsverfahren mit der gleichzeitigen Stromführendstellung von zwei Ventilen und der Bildung von drei Gruppen, die jeweils einen Versatz von 120° aufweisen.

Auf der Gleichstromseite des Stromrichters 42 ist in einem Gleichstromkreis, der durch den Stromrichter 42 stromgeregelt wird, ein Strommessgerät 44 und eine Spule 41 mit etwa 1 mH angeordnet. Das Strommessgerät 44 dient als Messeinrichtung für einen Addierer 52, der vom Sollwert 32 den tatsächlich im Gleichstromkreis fließenden Strom subtrahiert. Die Spule 41. stellt den Energiezwischenspeicher dar.

Des Weiteren ist an den Stromrichter 42 ein Transformator 43 angeschlossen, über den die 6-Puls-Brückenschaltung des Stromrichters 42 galvanisch getrennt mit dem Versorgungsnetz 31 verbunden ist. Der Transformator 43 ist im dargestellten Fall ein Drehstromtransformator, mit dem die 6-Puls-Brückenschaltung auf einem geeigneten Spannungsniveau betrieben werden kann.

Zum erstmaligen Aufbau des Stroms im Gleichstromkreis wird dem Generator 13 entsprechend dem Gleichstromanteil des Sollwerts 32 über das Versorgungsnetz 31, den Transformator 43 und den Stromrichter 42 Wirkleistung entnommen. Wegen der geringen Induktivität der Spule kann der Aufbau des Stroms im Gleichstromkreis beim Auftreten einer Torsionsschwingung mit Resonanzfrequenz innerhalb weniger Millisekunden erfolgen. Dies zeigt die hohe Dynamik der erfindungsgemäßen Dämpfung. Tritt eine Torsionsschwingung mit Resonanzfrequenz im Antriebsstrang auf, so enthält der Sollwert 32 einen Anteil, der in Gegenphase zur Winkelgeschwindigkeit der Schwingung schwingt. Dem Generator 13 wird dann entsprechend dem Schwingungsanteil des Sollwerts 32, also mit der Resonanzfrequenz, aber in Gegenphase zur Winkelgeschwindigkeit der Torsionsschwingung zusätzlich Wirkleistung entnommen oder zugeführt; wodurch die Schwingung im Antriebsstrang gedämpft wird.

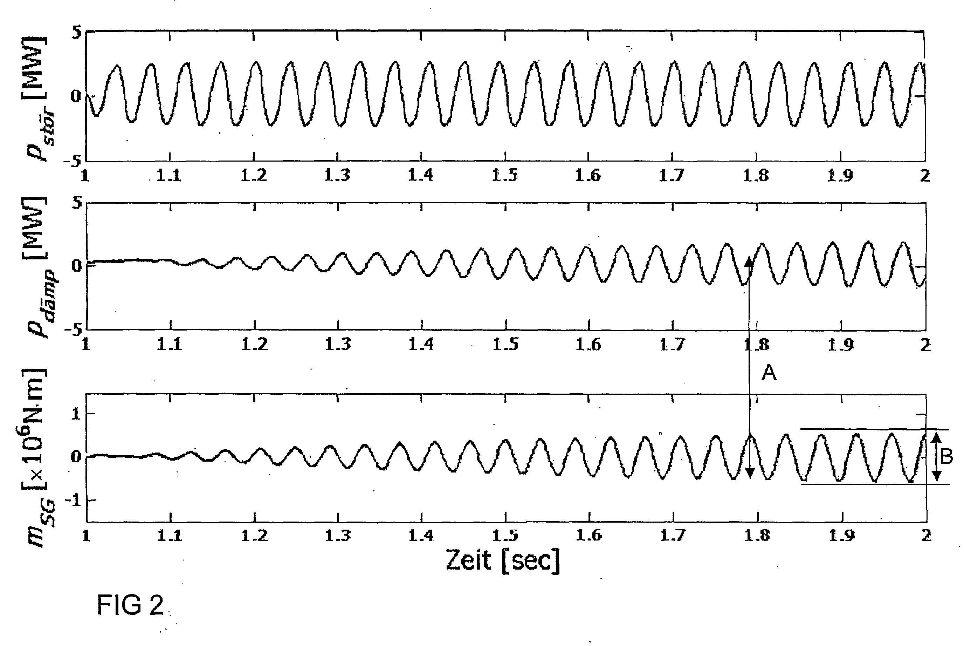

Fig. 2 zeigt mehrere Diagramme, die verschiedene im laufenden Betrieb einer Dämpfungsvorrichtung aufgezeichnete Größen über die Zeit darstellen. Im obersten Diagramm in Fig. 2 ist eine Störgröße $P_{stör}$ gezeigt, die eine Resonanztorsionsschwingung im Antriebsstrang anregt. Die Störgröße ist im dargestellten Fall eine Lastschwingung im elektrischen Netz, an dem die elektrische Maschine als Generator angeschlossen ist. Die Störgröße schwingt mit einer Frequenz, die im Wesentlichen der ersten Resonanzfrequenz des Antriebsstranges entspricht. Das Torsionsmoment $m_{SG}$ im Antriebsstrang ist im untersten Diagramm von Fig. 2 über die Zeit angetragen. Deutlich erkennt man, wie sich in Folge der Anregung eine stärker werdende Torsionsschwingung aufbaut. Die Torsionsschwingung wird von der Dämpfungsvorrichtung erfasst, worauf diese Wirkleistung $P_{dämp}$ in der Maschine verursacht. Der Verlauf der Wirkleistung $P_{dämp}$ ist im mittleren Diagramm über die Zeit angetragen. Die Wirkleistung $P_{dämp}$ ist gegenüber der Torsionsschwingung $m_{SG}$ um 90° phasenverschoben (siehe Pfeil A) und liegt in Gegenphase zur Winkelgeschwindigkeit der Torsionsschwingung. Durch die mit der zunehmenden Amplitude der Torsionsschwingung zunehmende Dämpfung wird die Torsionsschwingung trotz fortgesetzter Anregung begrenzt (siehe Pfeil. B).

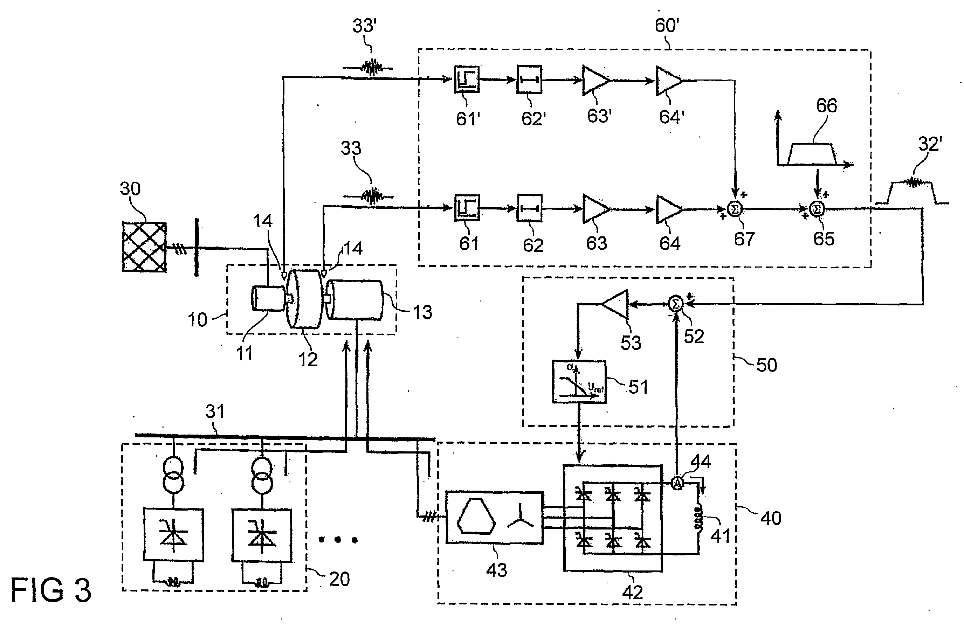

Figur 3 zeigt eine alternative Ausführungsform der Erfindung, die dazu geeignet ist, zwei Torsionsschwingungen mit unterschiedlicher Frequenz in einem Antriebsstrang zu dämpfen. Der Aufbau der Anlage entspricht in vielen Teilen dem Aufbau der in Figur 1 dargestellten Anlage. Die mit den gleichen Bezugszeichen versehenen Bauteile entsprechen in ihrer Funktion denen, die in Figur 1 gezeigt sind. Die Energieversorgungseinheit 10 entspricht der in Figur 1 gezeigten Energieversorgungseinheit 10, mit dem Unterschied, dass bei dem hier gezeigten Ausführungsbeispiel eine zweite Torsionsschwingung gedämpft werden soll, deren Resonanzfrequenz etwa 35 Hz beträgt. Bei der dazugehörigen Eigenform verdreht sich die Welle des Generators 13 und die Welle der Schwungmasse 12 gegenüber der Welle des Motors 11. Daneben existiert auch noch die erste Resonanzfrequenz mit der ersten Eigenform, die im Zusammenhang mit Figur 1 beschrieben wurde.

Die Torsionsschwingungen beider Resonanzfrequenzen werden angeregt durch Lastwechsel der Verbraucher 20, die über das Versorgungsnetz 31 mit elektrischer Energie vom Generator 13 versorgt werden. An dem Versorgungsnetz 31 ist wie bei dem in Figur 1 gezeigten Ausführungsbeispiel die erfindungsgemäße Dämpfungsvorrichtung angeschlossen, die ein Leistungsmodul 40, eine Steuerung 50 und einen Sensor 14 aufweist. Zur Ermittlung des Auftretens und der Amplitude der zweiten Torsionsschwingung weist die Dämpfungsvorrichtung weiterhin einen zweiten Sensor 14' und einen gegenüber dem in Figur 1 gezeigten abgewandelten Sollwertgeber 60' auf.

Die mechanische Belastung aufgrund der Torsionsschwingungen wird mit den beiden Sensoren 14 und 14' erfasst, die den magnetostriktiven Effekt ausnutzen. Die Sensoren 14 und 14' liefern die Signale 33 und 33', deren Verlauf sich aus den Schwingungsamplituden der Torsionsschwingungen und ggf. Störgrößen zusammensetzt. Das Signal 33 des Sensors 14 wird, wie in Figur 1 gezeigt, in einem Filter 61 gefiltert, in einem Phasenschieber 62 phasenverschoben, in einem Inverter 63 invertiert und in einem Verstärker 64 verstärkt. Die dadurch ermittelte Rückführgröße ist ein Schwingungssignal mit der Frequenz der Resonanzfrequenz der Torsionsschwingung, dessen Amplitude der Stärke der ersten Resonanztorsionsschwingung entspricht. Das Signal 33' des zweiten Sensors 14' wird in einem zweiten Filter 61' gefiltert, in einem zweiten Phasenschieber 62' phasenverschoben, in einem zweiten Inverter 63' invertiert und in einem zweiten Verstärker 64' verstärkt. Die dadurch ermittelte zweite Rückführgröße ist ein Schwingungssignal mit der Frequenz der Resonanzfrequenz der zweiten Torsionsschwingung, dessen Amplitude der Stärke der zweiten Resonanztorsionsschwingung entspricht. Die Filter 61, 61', die Phasenschieber 62, 62', die Inverter 63, 63' und die Verstärker 64, 64' sind jeweils auf die jeweilige Resonanzfrequenz abgestimmt.

In einem Rückführgrößenaddierer 67 werden die aus den beiden Signalen 33, 33' ermittelten Rückführgrößen addiert. Das Ergebnis der Addition ist ein überlagertes Schwingungssignal, das Frequenzanteile zur Dämpfung beider Torsionsschwingungen enthält. Zur Bildung eines Sollwerts 32' wird das die Summe der Rückführgrößen darstellende Schwingungssignal in einem Addierer 65 mit einem einstellbaren Gleichstromanteil 66 addiert. Der Sollwert 32' dient zur Ansteuerung der Leistungseinheit 40 durch die Steuerung 50. Der Gleichstromanteil 66 wird in Abhängigkeit vom Betriebszustand der Dämpfungsvorrichtung eingestellt oder manuell vorgegeben. Tritt keine Torsionsschwingung auf, so kann auch durch zu Null setzen des Gleichstromanteils 66 der Gleichstromkreis der Leistungseinheit 40 stromlos geschaltet werden. Die Stärke der Dämpfung kann durch die Höhe des Gleichstromanteils 66 eingestellt werden oder auch durch die Verstärkung der Verstärker 64, 64'. Durch das Verstärkungsverhältnis der beiden Verstärker 64, 64' kann auch das Verhältnis der Dämpfung der beiden Torsionsschwingungen eingestellt werden.

Der weitere Aufbau und die weitere Funktionsweise des in Fig. 3 dargestellten Beispiels entspricht dem in Figur 1 dargestellten Beispiel. Sollen mehr als zwei Torsionsschwingungen mit mehr als zwei verschiedenen Resonanzfrequenzen eines Antriebsstrangs gedämpft werden, so kann dies auf einfache Weise durch Erweiterung des Sollwertgebers 60' in Verbindung mit weiteren Sensoren bewerkstelligt werden. Der Sollwertgeber 60' wird dazu um jeweils einen weiteren Kanal bestehend aus Filter, Phasenschieber, Inverter und Verstärker erweitert, dessen Signal im Rückführgrößenaddierer 67 zu den anderen Rückführgrößen addiert wird.

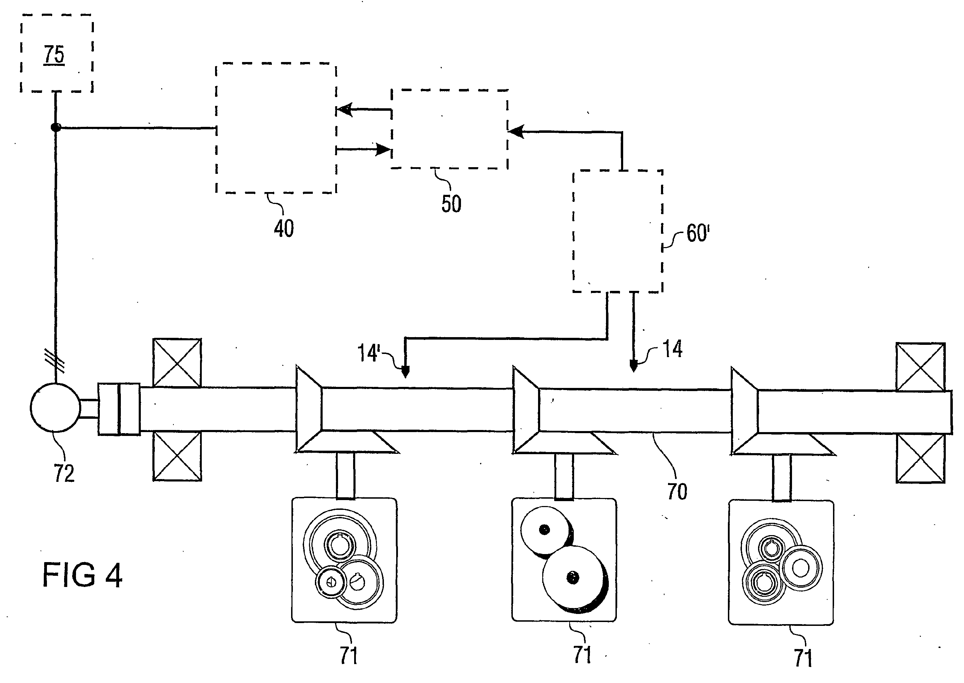

Die Figur 4 zeigt, wie mit Hilfe der Erfindung Schwingungen einer Königswelle 70 gedämpft werden können. Die Königswelle 70 treibt verschiedene Verbraucher 71 an und wird selbst von einem drehzahlveränderlichen Antrieb angetrieben. Der drehzahlveränderliche Antrieb besteht aus einem Synchronmotor 72, der von einer Energieversorgungseinheit 75 mit Drehstrom versorgt wird, der je nach gewünschter Drehzahl der Synchronmaschine 72 eine veränderliche Frequenz aufweist.

Wie bei dem in Figur 3 gezeigten Ausführungsbeispiel wird mit zwei Sensoren 14, 14' eine Torsionsbelastung der Königswelle 70 an verschiedenen Stellen ermittelt. Die Auswertung der Schwingungssignale und die Dämpfung über die Synchronmaschine 72 erfolgt gemäß dem in Figur 3 dargestellten und im Text zu Figur 3 beschriebenen Prinzip über einen modifizierten Sollwertgeber 60', eine Steuerung 50 und ein Leistungsmodul 40. Das Leistungsmodul 40 ist an dem Drehstromnetz, das die Synchronmaschine 72 versorgt, angeschlossen.

Im Unterschied zur Schwingungsanregung in Figur 3 erfolgt bei der Königswelle 70 die Schwingungsanregung nicht durch Lastschwankungen von elektrischen Verbrauchern sondern durch Lastschwankungen der mechanischen Verbraucher 71. Dies ändert jedoch nichts an der grundsätzlichen Funktionsweise der Erfindung.

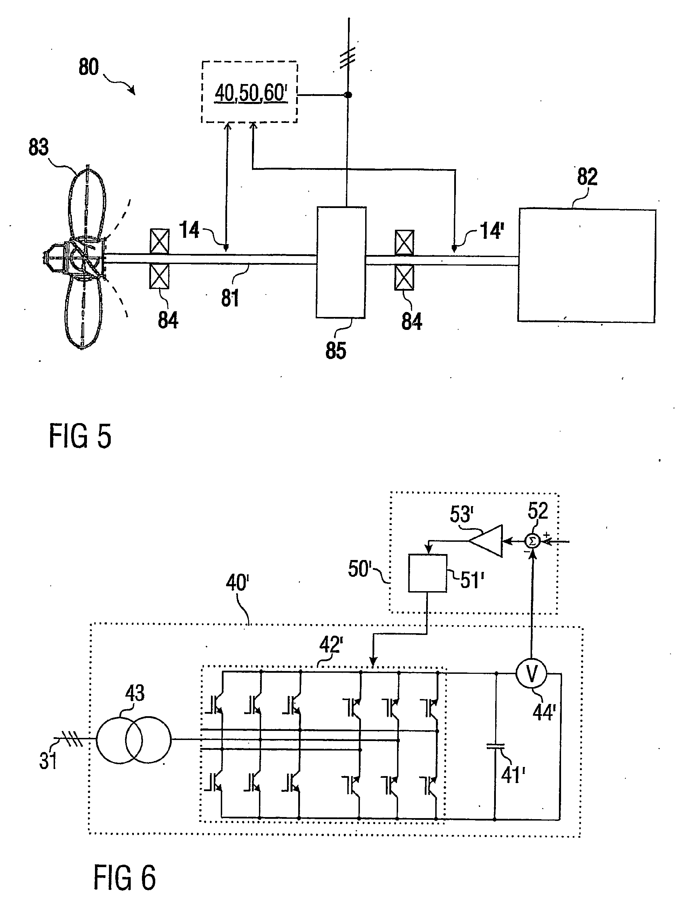

In Figur 5 ist beispielhaft in einer schematischen Darstellung gezeigt, wie mit der Erfindung Resonanztorsionsschwingungen einer Welle 81 eines Schiffsantriebs 80 gedämpft werden können. Im dargestellten Beispiel treibt ein Schiffsdiesel 82 mit einer Maximalleistung von etwa 30 MW über die Welle 81 eine Schiffsschraube 83 an. Die Lagerung der Welle 81 ist hier lediglich schematisch durch zwei Lager 84 skizziert. Zur Versorgung des Schiffes mit elektrischem Strom weist der Schiffsantrieb 80 einen von der Propellerwelle 81 angetriebenen Generator 85 auf, der eine maximale Leistung von etwa 2 MW aufweist.

In der Propellerwelle 81 können durch Lastwechsel an der Schiffsschraube 83, beispielsweise hervorgerufen durch schwere See, Resonanztorsionsschwingungen entstehen. Resonanztorsionsschwingungen können auch durch Lastwechsel von elektrischen Verbrauchern, die an dem Generator 85 angeschlossen sind, hervorgerufen werden. Die beiden niedrigsten Resonanztorsionsschwingungseigenformen der Welle 81 weisen die beiden folgenden Schwingungseigenformen auf. Bei der ersten Resonanzfrequenz verdreht sich die Welle 81 zwischen der Antriebsmaschine 82 und dem Generator 85, d.h. das Massenträgheitsmoment der rotierenden Teile der Antriebsmaschine 82 wirkt gegen die Massenträgheitsmomente der bewegten Teile des Generators 85 und der Schiffsschraube 83. Die zweite Schwingungseigenform besteht aus einer Verdrehung der Schiffsschraube 83 gegenüber dem Generator 85 und der Antriebsmaschine 82. Das Auftreten einer Resonanztorsionsschwingung mit der zweiten Eigenform kann mit dem Sensor 14 festgestellt werden, ein Auftreten einer Resonanztorsionsschwingung mit der ersten Eigenform kann mit dem Sensor 14' festgestellt werden. Die Dämpfung der Schwingungen erfolgt wie im Zusammenhang mit Figur 3 beschrieben durch den Einsatz eines modifizierten Sollwertgebers 60', eine Steuerung 50 und ein Leistungsmodul 40, das an den mit dem Generator verbundenen Mehrpol angeschlossen ist.

Mit der Erfindung können auch Resonanztorsionsschwingungen in einem Antriebsstrang eines Helikopters gedämpft werden. Dies erfolgt auf die gleiche Weise wie bei dem beschriebenen Schiffsantrieb, indem ein Generator zur Stromerzeugung, der Teil des Antriebsstrangs ist, dazu genutzt wird, dem Antriebsstrang ein Dämpfungsmoment aufzuprägen.

In Figur 6 ist eine alternative Ausführungsform des Leistungsmoduls 40 als IGBT-Leistungsmodul 40' gezeigt. Da IGBT-Transistoren spannungsgesteuert betrieben werden, ist auch eine entsprechend angepasste IGBT-Steuerung 50' zur Ansteuerung des IGBT-Leistungsmoduls 40' notwendig. Die dargestellten alternativen Teile können anstelle der in den Figuren 1 und 3 bis 5 gezeigten Leistungsmodule 40 und Steuerungen 50 eingesetzt werden, insbesondere falls Resonanztorsionsfrequenzen gedämpft werden sollen, die deutlich oberhalb der Netzfrequenz der Wechselstromseite des Stromrichters 42 des Leistungsmoduls 40 liegen, beispielsweise oberhalb der doppelten Netzfrequenz.

Das IGBT-Leistungsmodul 40' weist anstelle der Spule 41 einen Kondensator 41' als Energiespeicher auf. Der Kondensator 41' hat eine Kapazität von 20 mF und ist mit einem IGBT-Stromrichter 42' verbunden. Der IGBT-Stromrichter 42' weist zwölf IGBT-Transistoren auf, die so angesteuert werden können, dass der Kondensator 41' über einen Transformator 43 einem Mehrpol 31 Energie entnehmen oder zuführen kann. Der Mehrpol 31 und der Transformator 43 entsprechen den in Figur 1 mit den gleichen Bezugszeichen versehenen Teilen. Auf der Gleichstromseite des IGBT-Stromrichters 42' ist im Nebenschluss zu dem Kondensator 41' ein Spannungsmessgerät 44' angeordnet, das dazu dient, die IGBT-Steuerung 50' mit einem Messwert zur Ermittlung des Ladungszustands des Kondensators 41' zu versorgen.

Die IGBT-Steuerung 50' weist wie die in Figur 1 gezeigte Steuerung 50 einen Addierer 52 und einen Verstärker 53 auf, die die gleiche Funktion wie die in Figur 1 gezeigten Teile mit den gleichen Bezugszeichen haben. Anstelle der Zündwinkelsteuerung 51 wird ein IGBT-Steuermodul 51' eingesetzt, das zwölf IGBT-Transistoren des IGBT-Stromrichters 42' spannungsgesteuert so ansteuert, dass dem Mehrpol 31 über den Transformator 43 Energie mit einer Frequenz zugeführt und entnommen wird, die dazu geeignet ist, eine auftretende Resonanztorsionsschwingung im Antriebsstrang zu dämpfen. Die dem Mehrpol 31 entnommene Energie wird durch Stromführendstellen verschiedener IGBT-Transistoren dem Kondensator 41' zugeführt und darauffolgend in einem der Frequenz der Dämpfung entsprechenden Zeitabstand wieder entnommen, um dem Mehrpol 31 wieder zugeführt zu werden. Die Ansteuerung des IGBT-Stromrichters 42' durch das IGBT-Steuermodul 51' erfolgt auf an sich bekannte Art und Weise. Da die IGBT-Transistoren des IGBT-Stromrichters 42' zu jedem beliebigen Zeitpunkt stromführend oder sperrend durch das IGBT-Steuermodul 51' gestellt werden können, ist es möglich, dem Mehrpol 31 Energie mit einer Frequenz zu entnehmen oder zuzuführen, die auch deutlich oberhalb der Netzfrequenz des Mehrpols 31 liegt.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen.

**Patentansprüche**

1.    Verfahren zur Dämpfung einer Torsionsschwingung in einem rotierenden Antriebsstrang, der mindestens eine elektrische Maschine (13,72,82) aufweist, wobei die elektrische Maschine (13,72,82) dem Antriebsstrang ein Dämpfungsdrehmoment mit einer vorgegebenen, im wesentlichen einer Resonanzfrequenz des Antriebsstrangs entsprechenden Dämpfungsfrequenz und in Gegenphase zu der Winkelgeschwindigkeit der Torsionsschwingung aufgeprägt wird und zur Aufprägung des Dämpfungs-Drehmoments Energie in einem Gleichstromkreis mit einem Gleich- und einem Wechselanteil zwischengespeichert (41; 41') wird, wobei die zwischengespeicherte Energie einem Wechselstromkreis (31) entnommen wird, an den die elektrische Maschine (13,72,82) angeschlossen ist.

2.    Verfahren nach Anspruch 1, **dadurch gekennzeichnet, dass** die Torsionsschwingung des Antriebsstrangs ohne aufgeprägtes Dämpfungsdrehmoment einen Gütefaktor von mehr als 500 aufweist.

3.    Verfahren nach Anspruch 2, **dadurch gekennzeichnet, dass** der Gütefaktor mit aufgeprägtem Dämpfungsdrehmoment unter 200 liegt.

4.    Verfahren nach einem der vorhergehenden Ansprüche, **gekennzeichnet durch** folgende Schritte:

- Ermittlung mindestens einer Regelgröße (33,33'), welche eine Torsionsbeanspruchung an mindestens einer Stelle des Antriebsstrangs repräsentiert, und
- Regelung des Dämpfungsdrehmoments in Abhängigkeit von der Regelgröße (33,33') in einem Regelkreis.

**5.** Verfahren nach Anspruch 4, **dadurch gekennzeichnet, dass** die Regelgröße (33,33') aus einem Messsignal eines oder mehrerer Sensoren (14,14') ermittelt wird.

**6.** Verfahren nach Anspruch 5, **dadurch gekennzeichnet, dass** die Sensoren bezüglich des Antriebsstrangs azimuthal und/oder axial zueinander beabstandet sind.

**7.** Verfahren nach Anspruch 5 oder 6, **dadurch gekennzeichnet, dass** mindestens einer der Sensoren (14,14') ein magnetostriktiver Sensor und/oder ein Dehnmessstreifen und/oder ein Sensor zur Winkelgeschwindigkeitsmessung ist.

**8.** Verfahren nach mindestens einem der Ansprüche 4 bis 7, **dadurch gekennzeichnet, dass** aus der Regelgröße (33,33') eine Rückführgröße abgeleitet wird, indem die Regelgröße (33,33') gefiltert, phasenverschoben und invertiert wird, wobei die gesamte Phasenverschiebung im Regelkreis im wesentlichen 90° beträgt, wobei die Rückführgröße die von der Torsionsschwingung bei der Resonanzfrequenz verursachte Winkelgeschwindigkeit darstellt.

**9.** Verfahren nach mindestens einem der Ansprüche 1 bis 8, **dadurch gekennzeichnet, dass** die Energie im Gleichstromkreis mit mindestens einer Spule (41) zwischengespeichert wird.

**10.** Verfahren nach mindestens einem der Ansprüche 1 bis 9, **dadurch gekennzeichnet, dass** die Energie im Gleichstromkreis mit mindestens einem Kondensator (41') zwischengespeichert wird.

**11.** Verfahren nach mindestens einem der Ansprüche 1 bis 10, **gekennzeichnet durch** folgende Schritte:

- Bildung eines Sollwertes (32,32') für eine Stromregelung oder eine Spannungsregelung des Gleichstromkreises aus dem Gleichanteil und dem Wechselanteil, wobei der Wechselanteil die Rückführgröße repräsentiert und eine Frequenz aufweist, die im wesentlichen der Resonanzfrequenz entspricht, und
- Ansteuern des Gleichstromkreises mit dem Sollwert über einen mit dem Wechselstromkreis (31) verbundenen Stromrichter (42,42'), wobei über den Wechselstromkreis (31) Wirkleistung in der elektrischen Maschine (13,72,82) verursacht wird.

**12.** Verfahren nach Anspruch 11, **dadurch gekennzeichnet, dass** die Dämpfungsleistung über die Größe des Gleichanteils und/oder über die Größe des Wechselanteils eingestellt wird.

**13.** Verfahren nach Anspruch 11 oder 12, **dadurch gekennzeichnet, dass** maximal 5% der von der elektrischen Maschine (13,72,82) gewandelten Leistung über den Stromrichter (42,42') für die Dämpfung der Torsionsschwingung eingesetzt werden.

**14.** Verfahren nach mindestens einem der vorhergehenden Ansprüche, **dadurch gekennzeichnet, dass** die Gesamtmasse der rotierenden Teile des Antriebsstrangs mehr als 20t beträgt.

**15.** Verfahren nach mindestens einem der vorhergehenden Ansprüche, **dadurch gekennzeichnet, dass** die Torsionsschwingung mindestens eines weiteren Antriebsstrangs, der mindestens eine weitere elektrische Maschine aufweist, gedämpft wird, wobei die Antriebsstränge unterschiedliche Resonanzfrequenzen aufweisen.

**16.** Verfahren nach mindestens einem der vorhergehenden Ansprüche, **dadurch gekennzeichnet, dass** die elektrische Maschine (13,72,82) eine Synchronmaschine ist.

**17.** Verfahren nach mindestens einem der Ansprüche 1 bis 16, **dadurch gekennzeichnet, dass** im Gleichstromkreis nur bei Auftreten der Torsionsschwingung im Antriebsstrang Strom fließt.

**18.** Verfahren nach mindestens einem der vorhergehenden Ansprüche, **dadurch gekennzeichnet, dass** mehrere Torsionsschwingungen mit verschiedenen Frequenzen des rotierenden Antriebsstrangs gedämpft werden, wobei das Dämpfungsdrehmoment Dämpfungsfrequenzanteile mit vorgegebenen Dämpfungsfrequenzen enthält und die Dämpfungsfrequenzanteile jeweils in Gegenphase zu der Winkelgeschwindigkeit der entsprechenden Torsionsschwingung liegen.

**19.** Verfahren nach Anspruch 18, **dadurch gekennzeichnet, dass** die vorgegebenen Dämpfungsfrequenzen im wesentlichen Resonanzfrequenzen des Antriebsstrangs entsprechen.

**20.** Verfahren nach Anspruch 18 oder 19, **gekennzeichnet durch** folgende Schritte:

- Ermitteln mehrerer Regelgrößen (33,33')
- Bildung mehrerer Rückführgrößen aus den Regelgrößen (33,33') für die Torsionsschwingungen, wobei jede Rückführgröße eine Frequenz aufweist, die im wesentlichen gleich der Frequenz der entsprechenden Torsionsschwingungen ist,
- Bildung des Sollwertes (32,32') für die Stromregelung oder die Spannungsregelung des Gleichstromkreises aus dem Gleichanteil und dem Wechselanteil, wobei der Wechselanteil die Summe der Rückführgrößen repräsentiert, und

- Ansteuern des Gleichstromkreises mit dem Sollwert über den mit dem Wechselstromkreis (31) verbundenen Stromrichter (42,42'), wobei über den Wechselstromkreis (31) Wirkleistung in der elektrischen Maschine (13,72,82) verursacht wird.

21. Dämpfungsvorrichtung (40) zur Dämpfung einer Torsionsschwingung in einem rotierenden Antriebsstrang, der eine elektrischen Maschine (13,72,82) und einen an die elektrische Maschine (13,72,82) angeschlossenen elektrischen Mehrpol (31) aufweist, wobei die Dämpfungsvorrichtung (40)

    - durch den elektrischen Mehrpol (31) an die elektrische Maschine (13,72,82) anschließbar ist, und
    - zur Erzeugung eines Dämpfungsdrehmoments in der elektrischen Maschine (13,72,82) eingerichtet ist, wobei das Dämpfungsdrehmoment eine vorgegebene, im wesentlichen einer Resonanzfrequenz des Antriebsstrangs entsprechende Dämpfungsfrequenz aufweist und in Gegenphase zu der Winkelgeschwindigkeit der Torsionsschwingung liegt, und
    - einen Energiespeicher (41; 41') zum Zwischenspeichern von Energie umfasst, wobei die Energie der elektrischen Maschine (13,72,82) oder dem Mehrpol (31) entnommen wird.

22. Dämpfungsvorrichtung nach Anspruch 21, **dadurch gekennzeichnet, dass** die Torsionsschwingung des Antriebsstrangs ohne aufgeprägtes Dämpfungs-Drehmoment einen Gütefaktor von mehr als 500 aufweist.

23. Dämpfungsvorrichtung nach Anspruch 22, **dadurch gekennzeichnet, dass** der Gütefaktor mit aufgeprägtem Dämpfungs-Drehmoment unter 200 beträgt.

24. Dämpfungsvorrichtung nach mindestens einem der Ansprüche 20 bis 23, **gekennzeichnet durch** einen Regler, der die Stärke des Dämpfungs-Drehmoments in Abhängigkeit einer Regelgröße (33,33') regelt.

25. Dämpfungsvorrichtung nach Anspruch 24, **gekennzeichnet durch** eine Messeinrichtung und mindestens einen Sensor (14,14') zur Ermittlung der Regelgröße (33,33'), wobei die Messeinrichtung eingangsseitig mit dem Sensor (14,14') verbunden ist.

26. Dämpfungsvorrichtung nach Anspruch 25, **dadurch gekennzeichnet, dass** mehrere Sensoren vorgesehen sind, die bezüglich des Antriebsstrangs azimuthal und/oder axial zueinander beabstandet sind.

27. Dämpfungsvorrichtung nach Anspruch 25 oder 26, **dadurch gekennzeichnet, dass** der mindestens eine Sensor (14,14') ein magnetostriktiver Sensor und/oder ein Dehnmessstreifen und/oder ein Winkelgeschwindigkeitssensor ist.

28. Dämpfungsvorrichtung nach mindestens einem der Ansprüche 25 bis 27, **dadurch gekennzeichnet, dass**
die Messeinrichtung einen Filter (61), der auf die Resonanzfrequenz abgestimmt ist, einen Phasenschieber (62) und/oder einen Inverter (63) zur Erzeugung einer Rückführgröße aufweist, wobei die Rückführgröße ein Schwingungssignal mit der Dämpfungsfrequenz ist.

29. Dämpfungsvorrichtung nach einem der Ansprüche 21 bis 28, **dadurch gekennzeichnet, dass** der Energiespeicher mindestens eine Spule (41) aufweist, die in einem Gleichstromkreis mit Wechselstromanteil angeordnet ist.

30. Dämpfungsvorrichtung nach mindestens einem der Ansprüche 21 bis 29, **gekennzeichnet durch**
einen Stromrichter (42,42'), über den der Energiespeicher stromgesteuert oder spannungsgesteuert mit dem Mehrpol (31) verbindbar ist.

31. Dämpfungsvorrichtung nach Anspruch 30, **dadurch gekennzeichnet, dass** der Energiespeicher mindestens einen Kondensator (41') aufweist, der auf der Gleichstromseite des Stromrichters (42,42') angeordnet ist.

32. Dämpfungsvorrichtung nach mindestens einem der Ansprüche 21 bis 31, **dadurch gekennzeichnet, dass**
der Regler einen Addierer (65) mit zwei Eingängen aufweist, dessen einer Eingang mit der die Rückführgröße ausgebenden Messeinrichtung verbunden ist und an dessen anderem Eingang ein zu addierender Gleichanteil anliegt, wobei der Ausgang einen Sollwert (32,32') für eine Steuerung (50) des Stromrichters (42,42') ausgibt.

33. Dämpfungsvorrichtung nach Anspruch 32, **dadurch gekennzeichnet, dass** die Dämpfungsleistung regelbar ist, indem im Regler die Verstärkung der Rückführgröße und die Größe des Gleichanteils steuerbar ist.

34. Dämpfungsvorrichtung nach mindestens einem der Ansprüche 31 bis 33, **dadurch gekennzeichnet, dass**
der Stromrichter (42,42') eine maximale Leistung von 5% der von der elektrischen Maschine (13,72,82) gewandelten Leistung steuert.

35. Dämpfungsvorrichtung nach mindestens einem der Ansprüche 21 bis 34, **dadurch gekennzeichnet, dass**
der Antriebsstrang eine Gesamtmasse über 20t aufweist.

36. Dämpfungsvorrichtung nach mindestens einem der Ansprüche 21 bis 35, **dadurch gekennzeichnet, dass**
ein Regel- und mehrere Leistungsmodule vorhanden sind, wobei die Leistungsmodule von dem Regelmodul parallel gesteuert werden können, um eine höhere Dämpfungsleistung zu erreichen.

37. Dämpfungsvorrichtung nach mindestens einem der Ansprüche 21 bis 36, **dadurch gekennzeichnet, dass**
die elektrische Maschine (13,72,82) eine Synchronmaschine ist.

38. Dämpfungsvorrichtung nach mindestens einem der Ansprüche 21 bis 37, **dadurch gekennzeichnet, dass**
der Gleichstromkreis stromlos ist, wenn keine Torsionsschwingung auftritt.

39. Dämpfungsvorrichtung nach mindestens einem der Ansprüche 21 bis 38, **gekennzeichnet durch** mehrere Messeinrichtungen, mit denen für mehrere Torsionsschwingungen des Antriebsstrangs mit verschiedenen Frequenzen Rückführgrößen ermittelbar sind und die mit dem einen oder den mehreren Sensoren (14,14') verbunden sind.

40. Dämpfungsvorrichtung nach Anspruch 39, **dadurch gekennzeichnet, dass** die mehreren Sensoren (14,14') an Stellen des Antriebsstrangs angeordnet sind, an denen die durch die Torsionsschwingungen hervorgerufenen Verformungen maximal sind.

41. Dämpfungsvorrichtung nach Anspruch 39 oder 40, **gekennzeichnet durch** einen Rückführgrößen-Addierer (67), der die von den Messeinrichtungen ausgegebenen Rückführgrößen addiert und dessen Ausgang mit dem Eingang des Addierers (65) des Reglers verbunden ist.

42. Verwendung einer Dämpfungsvorrichtung gemäß einem der Ansprüche 21 bis 41 zur Dämpfung einer Torsionsschwingung, insbesondere einer Resonanztorsionsschwingung in einem Antriebsstrang eines Turbo- oder Windkraftgenerators, eines Schiffsantriebs (80), eines Helikopterantriebs oder eines Aufzugsantriebs oder in einer Königswelle (70)

**Claims**

1. Method for damping a torsional vibration in a rotating drive train which has at least one electrical machine (13, 72, 82), the electrical machine (13, 72, 82) impressing on the drive train a damping torque with a prescribed damping frequency which corresponds essentially to a resonance frequency of the drive train and in counter-phase to the angular velocity of the torsional vibration and, in order to impress the damping torque, energy is stored intermediately (41, 41') in a direct current circuit with a direct and an alternating component, the intermediately stored energy being removed from an alternating current circuit (31) to which the electrical machine (13, 72, 82) is connected.

2. Method according to claim 1, **characterised in that** the torsional vibration of the drive train without an impressed damping torque has a quality factor of more than 500.

3. Method according to claim 2, **characterised in that** the quality factor with an impressed damping torque is below 200.

4. Method according to one of the preceding claims, **characterised by** the following steps:

   - determination of at least one regulating variable (33, 33'), which represents a torsional loading at at least one position of the drive train, and
   - regulation of the damping torque as a function of the regulating variable (33, 33') in a control circuit.

5. Method according to claim 4, **characterised in that** the regulating variable (33, 33') is determined from a measuring signal of one or more sensors (14, 14').

6. Method according to claim 5, **characterised in that** the sensors, with respect to the drive train, are at a spacing from each other azimuthally and/or axially.

7. Method according to claim 5 or 6, **characterised in that** at least one of the sensors (14, 14') is a magnetostrictive sensor and/or a strain gauge and/or a sensor for angular velocity measurement.

8. Method according to at least one of the claims 4 to 7, **characterised in that** a primary feedback variable is derived from the regulating variable (33, 33') **in that** the regulating variable (33, 33') is filtered, phase-shifted and inverted, the overall phase-shift in the control circuit being essentially 90°, the primary feedback variable representing the angular velocity caused by the torsional vibration at the resonance frequency.

9. Method according to at least one of the claims 1 to 8, **characterised in that** the energy in the direct current circuit is stored intermediately by at least one coil (41).

10. Method according to at least one of the claims 1 to 9, **characterised in that** the energy in the direct current circuit is stored intermediately by at least one capacitor (41').

11. Method according to at least one of the claims 1 to 10, **characterised by** the following steps:

    - formation of a reference value (32, 32') for current regulation or voltage regulation of the direct current circuit from the direct component and the alternating component, the alternating component representing the primary feedback variable and having a frequency which corresponds essentially to the resonance frequency, and
    - actuation of the direct current circuit with the reference value via a current converter (42, 42') which is connected to the alternating current circuit (31), effective power in the electrical machine (13, 72, 82) being produced via the alternating current circuit (31).

12. Method according to claim 11, **characterised in that** the damping power is set via the value of the direct component and/or via the value of the alternating component.

13. Method according to claim 11 or 12, **characterised in that** at most 5% of the power converted by the electrical machine (13, 72, 82) via the current converter (42, 42') is used for damping the torsional vibration.

14. Method according to at least one of the preceding claims, **characterised in that** the total mass of the rotating parts of the drive train is more than 20 t.

15. Method according to at least one of the preceding claims, **characterised in that** the torsional vibration at least of one further drive train which has at least one further electrical machine is damped, the drive trains having different resonance frequencies.

16. Method according to at least one of the preceding claims, **characterised in that** the electrical machine (13, 72, 82) is a synchronous machine.

17. Method according to at least one of the claims 1 to 16, **characterised in that** current flows in the direct current circuit only upon occurrence of the torsional vibration in the drive train.

18. Method according to at least one of the preceding claims, **characterised in that** a plurality of torsional vibrations, with different frequencies, of the rotating drive train are damped, the damping torque containing damping frequency components with prescribed damping frequencies and the damping frequency components being respectively in counter-phase to the angular velocity of the corresponding torsional vibration.

19. Method according to claim 18, **characterised in that** the prescribed damping frequencies correspond essentially to resonance frequencies of the drive train.

20. Method according to claim 18 or 19, **characterised by** the following steps:

    - determination of a plurality of regulating variables (33, 33')
    - formation of a plurality of primary feedback variables from the regulating variables (33, 33') for the torsional vibrations, each primary feedback variable having a frequency which is essentially equal to the frequency of the corresponding torsional vibrations
    - formation of the reference value (32, 32') for the current regulation or the voltage regulation of the direct current circuit from the direct component and the alternating component, the alternating component representing the sum of the primary feedback variables, and
    - actuation of the direct current circuit with the reference value via the current converter (42, 42') which is connected to the alternating current circuit (31), effective power in the electrical machine (13, 72, 82) being produced via the alternating current circuit (31).

21. Damping device (40) for damping a torsional vibration in a rotating drive train which has an electrical machine (13, 72, 82) and an electrical multicontact (31) which is connected to the electrical machine (13, 72, 82), the damping device (40)

    - being able to be connected to the electrical machine (13, 72, 82) via the electrical multicontact (31), and
    - being equipped to generate a damping torque in the electrical machine (13, 72, 82), the damping torque having a prescribed damping frequency which corresponds essentially to a resonance frequency of the drive train and is in counter-phase to the angular velocity of the torsional vibration, and
    - including an energy store (41, 41') for intermediate storage of energy, the energy being removed from the electrical machine (13, 72, 82) or from the multicontact (31).

**22.** Damping device according to claim 21, **characterised in that** the torsional vibration of the drive train without an impressed damping torque has a quality factor of more than 500.

**23.** Damping device according to claim 22, **characterised in that** the quality factor with an impressed damping torque is below 200.

**24.** Damping device according to at least one of the claims 20 to 23, **characterised by** a regulator which regulates the strength of the damping torque as a function of a regulating variable (33, 33').

**25.** Damping device according to claim 24, **characterised by** a measuring device and at least one sensor (14, 14') for determining the regulating variable (33, 33'), the measuring device being connected on the input side to the sensor (14, 14').

**26.** Damping device according to claim 25, **characterised in that** a plurality of sensors is provided, which sensors, with respect to the drive train, are at a spacing from each other azimuthally and/or axially.

**27.** Damping device according to claim 25 or 26, **characterised in that** the at least one sensor (14, 14') is a magnetostrictive sensor and/or a strain gauge and/or an angular velocity sensor.

**28.** Damping device according to at least one of the claims 25 to 27, **characterised in that** the measuring device has a filter (61) which is tuned to the resonance frequency, a phase-shifter (62) and/or an inverter (63) for generating a primary feedback variable, the primary feedback variable being a vibration signal with the damping frequency.

**29.** Damping device according to one of the claims 21 to 28, **characterised in that** the energy store has at least one coil (41) which is disposed in a direct current circuit with an alternating current component.

**30.** Damping device according to at least one of the claims 21 to 29, **characterised by** a current converter (42, 42'), via which the energy store can be connected to the multicontact (31) with current control or voltage control.

**31.** Damping device according to claim 30, **characterised in that** the energy store has at least one capacitor (41') which is disposed on the direct current side of the current converter (42, 42').

**32.** Damping device according to at least one of the claims 21 to 31, **characterised in that** the regulator has an adder (65) with two inputs, one input of which is connected to the measuring device which issues the primary feedback variable and at the other input of which there is applied a direct component to be added, the output issuing a reference value (32, 32') for a control unit (50) of the current converter (42, 42').

**33.** Damping device according to claim 32, **characterised in that** the damping power is regulatable **in that** the amplification of the primary feedback variable and the value of the direct component can be controlled in the regulator.

**34.** Damping device according to at least one of the claims 31 to 33, **characterised in that** the current converter (42, 42') controls a maximum power of 5% of the power converted by the electrical machine (13, 72, 82).

**35.** Damping device according to at least one of the claims 21 to 34, **characterised in that** the drive train has a total mass above 20 t.

**36.** Damping device according to at least one of the claims 21 to 35, **characterised in that** a regulating module and a plurality of power modules are present, the power modules being able to be controlled in parallel by the regulating module in order to achieve a higher damping power.

**37.** Damping device according to at least one of the claims 21 to 36, **characterised in that** the electrical machine (13, 72, 82) is a synchronous machine.

**38.** Damping device according to at least one of the claims 21 to 37, **characterised in that** the direct current circuit is currentless when no torsional vibration occurs.

**39.** Damping device according to at least one of the claims 21 to 38, **characterised by** a plurality of measuring devices with which primary feedback variables can be determined for a plurality of torsional vibrations of the drive train with different frequencies and which are connected to the one or to the plurality of sensors (14, 14').

**40.** Damping device according to claim 39, **characterised in that** the plurality of sensors (14, 14') are disposed at positions of the drive train at which the deformations caused by the torsional vibrations are greatest.

**41.** Damping device according to claim 39 or 40, **characterised by** a primary feedback variable adder (67) which adds the primary feedback variables issued by the measuring devices and the output of which is connected to the input of the adder (65) of the regulator.

**42.** Use of a damping device according to one of the claims 21 to 41 for damping a torsional vibration, in particular a resonance torsional vibration in a drive train of a turbogenerator or wind power generator, a ship's propulsion (80), a helicopter drive or a lift drive or in a vertical shaft (70).

**Revendications**

**1.** Procédé d'amortissement d'une oscillation de torsion dans une chaîne cinématique en rotation, qui présente au moins une machine électrique (13, 72, 82), la machine électrique (13, 72, 82) appliquant à la chaîne cinématique un couple d'amortissement avec une fréquence d'amortissement prédéfinie, correspondant essentiellement à une fréquence de résonance de la chaîne cinématique et en phase opposée à la vitesse angulaire de l'oscillation de torsion et de l'énergie étant emmagasinée temporairement (41, 41') dans un circuit à courant continu avec une composante de courant continu et une composante de courant alternatif pour l'application du couple d'amortissement, l'énergie emmagasinée temporairement étant prélevée d'un circuit à courant alternatif (31) auquel est raccordée la machine électrique (13, 72, 82).

**2.** Procédé selon la revendication 1, **caractérisé en ce que** l'oscillation de torsion de la chaîne cinématique sans application de couple d'amortissement présente un facteur de qualité supérieur à 500.

**3.** Procédé selon la revendication 2, **caractérisé en ce que** le facteur de qualité avec application de couple d'amortissement est inférieur à 200.

**4.** Procédé selon l'une quelconque des revendications précédentes, **caractérisé par** les étapes suivantes:

- détermination d'au moins une grandeur de réglage (33, 33') qui représente un effort de torsion à au moins un endroit de la chaîne cinématique, et
- régulation du couple d'amortissement en fonction de la grandeur de réglage (33, 33') dans un circuit de régulation.

**5.** Procédé selon la revendication 4, **caractérisé en ce que** la grandeur de réglage (33, 33') est déterminée à partir d'un signal de mesure d'un ou de plusieurs capteurs (14, 14').

**6.** Procédé selon la revendication 5, **caractérisé en ce que** les capteurs sont espacés les uns des autres de manière azimutale et/ou axiale par rapport à la chaîne cinématique.

**7.** Procédé selon la revendication 5 ou 6, **caractérisé en ce qu'**au moins un des capteurs (14, 14') est un capteur magnétostricteur et/ou une jauge extensométrique et/ou un capteur de mesure de la vitesse angulaire.

**8.** Procédé selon au moins une des revendications 4 à 7, **caractérisé en ce qu'**une grandeur de retour est déduite de la grandeur de réglage (33, 33') en filtrant, déphasant et inversant la grandeur de réglage (33, 33'), l'ensemble du déphasage dans le circuit de régulation s'élevant essentiellement à 90°, la grandeur de retour représentant la vitesse angulaire provoquée par l'oscillation de torsion pour la fréquence de résonance.

**9.** Procédé selon au moins une des revendications 1 à 8, **caractérisé en ce que** l'énergie est emmagasinée temporairement dans le circuit à courant continu avec au moins une bobine (41).

**10.** Procédé selon au moins une des revendications 1 à 9, **caractérisé en ce que** l'énergie est emmagasinée temporairement dans le circuit à courant continu avec au moins un condensateur (41').

**11.** Procédé selon au moins une des revendications 1 à 10, **caractérisé par** les étapes suivantes :

- formation d'une valeur de consigne (32, 32') pour une régulation du courant ou une régulation de la tension du circuit à courant continu à partir de la composante de courant continu et de la composante de courant alternatif, la composante de courant alternatif représentant la grandeur de retour et présentant une fréquence qui correspond essentiellement à la fréquence de résonance, et
- commande du circuit à courant continu avec la valeur de consigne par le biais d'un convertisseur (42, 42') relié au circuit à courant alternatif (31), la puissance active dans la machine électrique (13, 72, 82) étant générée par le biais du circuit à courant alternatif (31).

**12.** Procédé selon la revendication 11, **caractérisé en ce que** la puissance d'amortissement est réglée par le biais de la grandeur de la composante de courant continu et/ou par le biais de la grandeur de la composante de courant alternatif.

**13.** Procédé selon la revendication 11 ou 12, **caractérisé en ce que** 5 % au maximum de la puissance convertie par la machine électrique (13, 72, 82) sont utilisés par le biais du convertisseur (42, 42') pour l'amortissement de l'oscillation de torsion.

**14.** Procédé selon au moins une des revendications précédentes, **caractérisé en ce que** la masse totale des pièces en rotation de la chaîne cinématique est supérieure à 20t.

**15.** Procédé selon au moins une des revendications précédentes, **caractérisé en ce que** l'oscillation de torsion d'au moins une autre chaîne cinématique, qui présente au moins une autre machine électrique, est amortie, les chaînes cinématiques présentant différentes fréquences de résonance.

**16.** Procédé selon au moins une des revendications précédentes, **caractérisé en ce que** la machine électrique (13, 72, 82) est une machine synchrone.

**17.** Procédé selon au moins une des revendications 1 à 16, **caractérisé en ce que** du courant ne circule dans le circuit à courant continu qu'en cas d'apparition de l'oscillation de torsion dans la chaîne cinématique.

**18.** Procédé selon au moins une des revendications précédentes, **caractérisé en ce que** plusieurs oscillations de torsion sont amorties avec différentes fréquences de la chaîne cinématique en rotation, le couple d'amortissement contenant des composantes de fréquence d'amortissement avec des fréquences d'amortissement prédéfinies et les composantes de fréquence d'amortissement se trouvant respectivement en phase opposée à la vitesse angulaire de l'oscillation de torsion correspondante.

**19.** Procédé selon la revendication 18, **caractérisé en ce que** les fréquences d'amortissement prédéfinies correspondent essentiellement aux fréquences de résonance de la chaîne cinématique.

**20.** Procédé selon la revendication 18 ou 19, **caractérisé par** les étapes suivantes :

- détermination de plusieurs grandeurs de réglage (33, 33')
- formation de plusieurs grandeurs de retour à partir des grandeurs de réglage (33, 33') pour les oscillations de torsion, chaque grandeur de retour présentant une fréquence qui est essentiellement égale à la fréquence des oscillations de torsion correspondantes,
- formation de la valeur de consigne (32, 32') pour la régulation du courant ou la régulation de la tension du circuit à courant continu à partir de la composante de courant continu et de la composante de courant alternatif, la composante de courant alternatif représentant la somme des grandeurs de retour, et
- commande du circuit à courant continu avec la valeur de consigne via le convertisseur (42, 42') relié au circuit à courant alternatif (31), la puissance active dans la machine électrique (13, 72, 82) étant générée par le biais du circuit à courant alternatif (31).

**21.** Dispositif d'amortissement (40) permettant d'amortir une oscillation de torsion dans une chaîne cinématique en rotation, qui présente une machine électrique (13, 72, 82) et un multipolaire électrique (31) raccordé à la machine électrique (13, 72, 82), le dispositif d'amortissement (40),

- pouvant être raccordé à la machine électrique (13, 72, 82) par le multipolaire électrique(31), et
- étant conçu pour produire un couple d'amortissement dans la machine électrique (13, 72, 82), le couple d'amortissement présentant une fréquence d'amortissement prédéfinie, correspondant essentiellement à une fréquence de résonance de la chaîne cinématique et se trouvant en phase opposée à la vitesse angulaire de l'oscillation de torsion, et
- comprenant un réservoir d'énergie (41, 41') pour le stockage intermédiaire de l'énergie, l'énergie étant prélevée de la machine électrique (13, 72, 82) ou du multipolaire (31).

**22.** Dispositif d'amortissement selon la revendication 21, **caractérisé en ce que** l'oscillation de torsion de la chaîne cinématique sans application de couple d'amortissement présente un facteur de qualité supérieur à 500.

**23.** Dispositif d'amortissement selon la revendication 22, **caractérisé en ce que** le facteur de qualité avec application de couple d'amortissement est inférieur à 200.

**24.** Dispositif d'amortissement selon au moins une des revendications 20 à 23, **caractérisé par** un régulateur, qui régule l'intensité du couple d'amortissement en fonction d'une grandeur de réglage (33, 33').

**25.** Dispositif d'amortissement selon la revendication 24, **caractérisé par** un dispositif de mesure et au moins un capteur (14, 14') permettant de déterminer la grandeur de réglage (33,33'), le dispositif de mesure étant relié au capteur (14, 14') côté entrée.

**26.** Dispositif d'amortissement selon la revendication 25, **caractérisé en ce que** plusieurs capteurs sont prévus, qui sont espacés les uns des autres de manière azimutale et/ou axiale par rapport à la chaîne cinématique.

**27.** Dispositif d'amortissement selon la revendication 25 ou 26, **caractérisé en ce que** l'au moins un capteur (14, 14') est un capteur magnétostricteur et/ou une jauge extensométrique et/ou un capteur de mesure de la vitesse angulaire.

**28.** Dispositif d'amortissement selon au moins une des revendications 25 à 27, **caractérisé en ce que** le dispositif de mesure présente un filtre (61), qui est accordé sur la fréquence de résonance, un déphaseur (62) et/ou un inverseur (63) permettant de générer une grandeur de retour, la grandeur de retour étant un signal d'oscillation avec la fréquence d'amortissement.

**29.** Dispositif d'amortissement selon l'une quelconque des revendications 21 à 28, **caractérisé en ce que** le réservoir d'énergie présente au moins une bobine (41) qui est placée dans un circuit à courant continu avec une composante de courant alternatif.

**30.** Dispositif d'amortissement selon au moins une des revendications 21 à 29, **caractérisé par** un convertisseur (42, 42') par l'intermédiaire duquel le réservoir d'énergie peut être relié au multipolaire (31) par commande en courant ou en tension.

**31.** Dispositif selon la revendication 30, **caractérisé en ce que** le réservoir d'énergie présente au moins un condensateur (41'), qui est disposé côté courant continu du convertisseur (42, 42').

**32.** Dispositif d'amortissement selon au moins une des revendications 21 à 31, **caractérisé en ce que** le régulateur présente un sommateur (65) à deux entrées, dont une entrée est reliée au dispositif de mesure émettant la grandeur de retour et contre l'autre entrée duquel se trouve une composante de courant continu à additionner, la sortie émettant une valeur de consigne (32, 32') pour une commande (50) du convertisseur (42, 42').

**33.** Dispositif d'amortissement selon la revendication 32, **caractérisé en ce que** la puissance d'amortissement est réglable par le fait que dans le régulateur, le renforcement de la grandeur de retour et la grandeur de la composante de courant continu peuvent être commandés.

**34.** Dispositif d'amortissement selon au moins une des revendications 31 à 33, **caractérisé en ce que** le convertisseur (42, 42') commande une puissance maximale de 5 % de la puissance convertie par la machine électrique (13, 72, 82).

**35.** Dispositif d'amortissement selon au moins une des revendications 21 à 34, **caractérisé en ce que** la chaîne cinématique présente une masse totale supérieure à 20t.

**36.** Dispositif d'amortissement selon au moins une des revendications 21 à 35, **caractérisé en ce que** il y a un module de régulation et plusieurs modules de puissance, les modules de puissances pouvant être commandés en parallèle par le module de régulation pour atteindre une puissance d'amortissement plus élevée.

**37.** Dispositif d'amortissement selon au moins une des revendications 21 à 36, **caractérisé en ce que** la machine électrique (13, 72, 82) est une machine synchrone.

**38.** Dispositif d'amortissement selon au moins une des revendications 21 à 37, **caractérisé en ce que** le circuit à courant continu est hors tension, lorsqu'il n'y a aucune oscillation de torsion.

**39.** Dispositif d'amortissement selon au moins une des revendications 21 à 38, **caractérisé par** plusieurs dispositifs de mesure, avec lesquels des grandeurs de retour peuvent être déterminées pour plusieurs oscillations de torsion de la chaîne cinématique avec différentes fréquences et qui sont reliés à un ou à la pluralité de capteurs (14, 14').

**40.** Dispositif d'amortissement selon la revendication 39, **caractérisé en ce que** la pluralité de capteurs (14, 14') est disposée à des endroits de la chaîne cinématique où les déformations provoquées par les oscillations de torsion sont maximales.

**41.** Dispositif d'amortissement selon la revendication 39 ou 40, **caractérisé par** un sommateur de grandeurs de retour (67), qui additionne les grandeurs de retour émises par les dispositifs de mesure et dont la sortie est reliée à l'entrée du sommateur (65) du régulateur.

**42.** Utilisation d'un dispositif d'amortissement selon l'une quelconque des revendications 21 à 41 pour l'amortissement d'une oscillation de torsion, en particulier d'une oscillation de torsion de résonance dans une chaîne cinématique d'un turbogénérateur ou générateur d'énergie éolienne, d'un moteur de navire (80), d'un moteur d'hélicoptère ou d'un moteur d'ascenseur ou dans un arbre de renvoi (70).

FIG 1

EP 1 634 368 B1

FIG 2

EP 1 634 368 B1

FIG 3

EP 1 634 368 B1

60'

50

40

75

14

14'

70

71

71

71

72

**FIG 4**

FIG 5

FIG 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5804949 A
- US 4377780 A
- US 5537967 A

### In der Beschreibung aufgeführte Nicht-Patentliteratur

- **C.-J. WU et al.** *IE-EE Trans. Energy Conv.,* 1993, vol. 8, 63 ff